(19)

Europäisches
Patentamt
European
Patent Office
Office européen
des brevets

(11) **EP 2 941 044 A1**

(12) **EUROPEAN PATENT APPLICATION**
published in accordance with Art. 153(4) EPC

(43) Date of publication:
**04.11.2015 Bulletin 2015/45**

(51) Int Cl.:
***H04W 28/08*** *(2009.01)*

(21) Application number: **13868286.9**

(22) Date of filing: **13.12.2013**

(86) International application number:
**PCT/CN2013/089367**

(87) International publication number:
**WO 2014/101674 (03.07.2014 Gazette 2014/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.12.2012 PCT/CN2012/088148**

(71) Applicant: **Huawei Technologies Co., Ltd.
Longgang District
Shenzhen, Guangdong 518129 (CN)**

(72) Inventors:
• **QIAN, Ying
Shenzhen
Guangdong 518129 (CN)**

• **FU, Yusun
Shenzhen
Guangdong 518129 (CN)**
• **WU, Yuzhong
Shenzhen
Guangdong 518129 (CN)**
• **PENG, Jingbo
Shenzhen
Guangdong 518129 (CN)**

(74) Representative: **Isarpatent
Patentanwälte Behnisch Barth Charles
Hassa Peckmann & Partner mbB
Friedrichstrasse 31
80801 München (DE)**

(54) **LOAD BALANCING METHOD AND NETWORK CONTROL NODE**

(57)    Embodiments of the present invention provide a load balancing method and a network control node. An entity in which a serving cell is located selects a scheduling cell for an edge UE, and instructs the scheduling cell to allocate a data channel for the edge UE, and a control channel is retained in the serving cell and is not handed over. In this way, in a case of being transparent to the UE, an objective of load balancing is achieved by automatic fast coordinating and scheduling without handover. It can be seen that, in the foregoing load balancing manner, a data channel is used as transferring granularity, and a handover time delay does not need to be introduced, thereby implementing a function of fast balancing instantaneous load, and improving load balancing efficiency.

| Serving cell | | Neighboring cell |
|---|---|---|
| | S701: State information of a UE → | |
| | | S702: Calculate a utility value of scheduling an edge UE in the neighboring cell |
| | ← S703: Utility value | |
| S704: Determine a scheduling cell of the edge UE | | |
| | S705: Notify the scheduling cell → | |
| | | S706: Allocate a data channel resource |
| | ← S707: Allocation result of the data channel resource | |
| S708: Allocate a control channel resource | | |
| | S709: Data → | |
| | | S710: Send the data to the edge UE |

FIG. 7

EP 2 941 044 A1

## Description

### TECHNICAL FIELD

Embodiments of the present invention relate to the field of wireless communications, and in particular, to a load balancing method and a network control node.

### BACKGROUND

In a long term evolution (Long Term Evolution, LTE) system, a load level of a cell is jointly determined by factors such as user distribution, mobility, and a user service type. In other words, distribution of user equipments (User Equipment, UE) in a cell is random, and usually is non-uniform and changes with time. Therefore, it is probable that load on an entire network may be in an unbalanced distribution state, resulting in a significant decrease in user experience of a certain heavily-loaded cell.

Load balancing (Load Balancing) is used to determine load magnitude of a cell, perform inter-cell load information exchange, and transfer load from a busy cell to a cell with a large number of remaining resources. In this way, load distribution among cells is coordinated, network resource utilization is maximized, and a system congestion rate is lowered, thereby enhancing service feeling of users.

In an existing load balancing technology, usually, a base station periodically measures a utilization rate of an air interface resource occupied by a cell service, namely, a utilization rate of a physical resource block (Physical Resource Block, PRB), and evaluates a cell load according to a measurement result. When the utilization rate of the air interface resource of a cell is higher than a threshold, the cell initiates a load interaction request to a neighboring cell that meets a condition, and performs load information exchange with the neighboring cell. Then, the base station performs comprehensive determination according to a load difference and handover performance between a serving cell and a target neighboring cell, and selects an optimal target cell. After the target cell is determined, the serving cell selects some UEs to perform load transferring, and a load transferring means includes handover and cell reselection.

However, load transferring granularity is coarse when handover and cell reselection are used as a load balancing means, and only a UE can be used as a unit. In addition, a time delay required by the handover is long, and it is difficult to fast balance instantaneous load. It can be seen that, existing load balancing efficiency is low.

### SUMMARY

Embodiments of the present invention provide a load balancing method and a network control node, so as to improve load balancing efficiency.

According to a first aspect, a load balancing method is provided and includes: selecting, by a first entity in which a serving cell of an edge user equipment UE is located, a scheduling cell for the edge UE from a neighboring cell of the serving cell, where an entity in which the scheduling cell is located is a second entity; instructing, by the first entity, the second entity to allocate, in the scheduling cell, a data channel resource for the edge UE; receiving, by the first entity, an allocation result that is of the data channel resource and is sent by the second entity, and allocating, in the serving cell, a control channel resource for the edge UE according to the allocation result of the data channel resource; and sending, by the first entity, data of the edge UE to the second entity, so as to send the data of the edge UE to the edge UE by using the allocated data channel resource.

With reference to the first aspect, in a first implementation manner of the first aspect, the selecting, by a first entity, a scheduling cell for the edge UE includes: obtaining scheduling utility values of the edge UE in all neighboring cells; and selecting, according to the scheduling utility values of the edge UE in all the neighboring cells, a cell with an optimal utility value from all the neighboring cells as the scheduling cell.

With reference to the first implementation manner of the first aspect, in a second implementation manner of the first aspect, the obtaining scheduling utility values of the edge UE in all neighboring cells includes: obtaining a scheduling utility value of the edge UE in a first neighboring cell, where the first neighboring cell is any one neighboring cell of all the neighboring cells, and the obtaining a scheduling utility value of the edge UE in a first neighboring cell includes: sending, by the first entity, state information of the edge UE in the serving cell to an entity in which the first neighboring cell is located; and receiving the scheduling utility value that is of the edge UE in the first neighboring cell and is determined, according to the state information of the edge UE, by the entity in which the first neighboring cell is located.

With reference to the first aspect or one of the first to the second implementation manners of the first aspect, in a third implementation manner of the first aspect, before the selecting, by a first entity, a scheduling cell for the edge UE, the method further includes: determining the edge UE to be scheduled, which includes: sorting all cells that meet a condition according to a load indicator; and determining an edge UE in a most heavily loaded cell as the edge UE to be scheduled.

With reference to the third implementation manner of the first aspect, in a fourth implementation manner of the first aspect, the met condition is that a capacity and a time delay of a communication link between cells enable sharing and synchronization of UE data between the cells.

With reference to the third or the fourth implementation manner of the first aspect, in a fifth implementation manner of the first aspect, the load indicator includes a highest scheduling priority of a cell, or the number of to-be-scheduled UEs with a data volume.

With reference to the first aspect or one of the first to the fifth implementation manners of the first aspect, in a sixth implementation manner of the first aspect, before the selecting, by a first entity, a scheduling cell for the edge UE, the method further includes: detecting control channel load of the serving cell of the edge UE; and when the control channel load is lower than a threshold, selecting the scheduling cell for the edge UE.

With reference to the first aspect or one of the first to the sixth implementation manners of the first aspect, in a seventh implementation manner of the first aspect, the control channel is a physical downlink control channel PDCCH, and the data channel is a physical downlink shared channel PDSCH.

According to a second aspect, a load balancing method is provided and includes: receiving, by a second entity in which a scheduling cell of an edge user equipment UE is located, a notification message sent by a first entity, where the first entity is an entity in which a serving cell of the edge UE is located, and the notification message is sent by the first entity to the second entity after the first entity selects the scheduling cell for the edge UE from a neighboring cell of the serving cell, and is used to instruct the second entity to allocate a data channel resource for the edge UE; allocating, by the second entity and in the scheduling cell, a data channel resource for the edge UE according to the notification message; sending, by the second entity, an allocation result of the data channel resource to the first entity, so that the first entity allocates, in the serving cell, a control channel resource for the edge UE according to the allocation result of the data channel resource, and sends data of the edge UE to the second entity; and receiving, by the second entity, the data of the edge UE, and sending the data of the edge UE to the edge UE by using the allocated data channel resource.

With reference to the second aspect, in a first implementation manner of the second aspect, before the receiving, by a second entity, a notification message sent by a first entity, the method further includes: receiving state information that is of the edge UE in the serving cell and is sent by the first entity; determining a scheduling utility value of the edge UE in the scheduling cell according to the state information of the edge UE in the serving cell; and sending the utility value to the first entity, so that the first entity selects the scheduling cell according to the utility value.

With reference to the second aspect or the first implementation manner of the second aspect, in a second implementation manner of the second aspect, the control channel is a physical downlink control channel PDCCH, and the data channel is a physical downlink shared channel PDSCH.

According to a third aspect, a load balancing apparatus is provided, which is located at a first entity in which a serving cell of an edge user equipment UE is located, and the apparatus includes: a selecting unit, configured to select a scheduling cell for the edge UE from a neighboring cell of the serving cell, where an entity in which the scheduling cell is located is a second entity; an interface unit, configured to instruct the second entity to allocate, in the scheduling cell, a data channel resource for the edge UE, and configured to receive an allocation result that is of the data channel resource and is sent by the second entity; and an allocating unit, configured to allocate, in the serving cell, a control channel resource for the edge UE according to the allocation result of the data channel resource, where the interface unit is further configured to send data of the edge UE to the second entity, so as to send the data of the edge UE to the edge UE by using the allocated data channel resource.

With reference to the third aspect, in a first implementation manner of the third aspect, the interface unit is further configured to obtain scheduling utility values of the edge UE in all neighboring cells; and the selecting unit is specifically configured to select, according to the scheduling utility values of the edge UE in all the neighboring cells, a cell with an optimal utility value from all the neighboring cells as the scheduling cell.

With reference to the first implementation manner of the third aspect, in a second implementation manner of the third aspect, the scheduling utility values of the edge UE in all the neighboring cells are determined, according to state information of the edge UE in the serving cell, by an entity in which each neighboring cell is located.

With reference to the third aspect or the first or the second implementation manner of the third aspect, in a third implementation manner of the third aspect, the apparatus further includes: a sorting unit, configured to sort all cells that meet a condition according to a load indicator; and a determining unit, configured to determine that an edge UE in a most heavily loaded cell is the edge UE to be scheduled.

With reference to the third implementation manner of the third aspect, in a fourth implementation manner of the third aspect, the met condition is that a capacity and a time delay of a communication link between cells enable sharing and synchronization of UE data between the cells.

With reference to the third or the fourth implementation manner of the third aspect, in a fifth implementation manner of the third aspect, the load indicator includes a highest scheduling priority of a cell, or the number of to-be-scheduled UEs with a data volume.

With reference to the third aspect or the first or the fifth implementation manner of the third aspect, in a sixth implementation manner of the third aspect, the apparatus further includes: a detecting unit, configured to detect control channel load of the serving cell of the edge UE; and the selecting unit is configured to, when the control channel load is lower than a threshold, select the scheduling cell for the edge UE.

With reference to the third aspect or the first or the sixth implementation manner of the third aspect, in a seventh implementation manner of the third aspect, the control channel is a physical downlink control channel PDCCH, and the data channel is a physical downlink shared channel PDSCH.

According to a fourth aspect, a load balancing apparatus is provided, which is located at a second entity in which a scheduling cell of an edge user equipment UE is located, and the apparatus includes: an interface unit, configured to receive a notification message sent by a first entity, where the first entity is an entity in which a serving cell of the edge UE is located, and the notification message is sent by the first entity to the second entity after the first entity selects the scheduling cell for the edge UE from a neighboring cell of the serving cell, and is used to instruct the second entity to allocate a data channel resource for the edge UE; an allocating unit, configured to allocate, in the scheduling cell, a data channel resource for the edge UE according to the notification message, where the interface unit is further configured to send an allocation result of the data channel resource to the first entity, so that the first entity allocates, in the serving cell, a control channel resource for the edge UE according to the allocation result of the data channel resource, and sends data of the edge UE to the second entity, and further configured to receive the data of the edge UE; and a sending unit, configured to send the data to the edge UE by using the allocated data channel resource.

With reference to the fourth aspect, in a first implementation manner of the fourth aspect, the interface unit is further configured to receive state information that is of the edge UE in the serving cell and is sent by the first entity; and the apparatus further includes: a determining unit, configured to determine a scheduling utility value of the edge UE in the scheduling cell according to the state information that is of the edge UE in the serving cell and is sent by the first entity; and the interface unit is further configured to send the utility value determined by the determining unit to the first entity, so that the first entity selects the scheduling cell according to the utility value.

With reference to the fourth aspect or the first implementation manner of the fourth aspect, in a second implementation manner of the fourth aspect, the control channel is a physical downlink control channel PDCCH, and the data channel is a physical downlink shared channel PDSCH.

According to a fifth aspect, a load balancing system is provided and includes the first load balancing apparatus according to the third aspect or any one implementation manner of the third aspect and the second load balancing apparatus according to the fourth aspect or any one implementation manner of the fourth aspect.

It can be seen that, in the embodiments of the present invention, an entity in which a serving cell is located selects a scheduling cell for an edge UE, and instructs the scheduling cell to allocate a data channel for the edge UE, and a control channel is retained in the serving cell and is not handed over. In this way, in a case of being transparent to the UE, an objective of load balancing is achieved by automatic fast coordinating and scheduling without handover. It can be seen that, in the foregoing load balancing manner, a data channel is used as transferring granularity, and a handover time delay does not need to be introduced, thereby implementing a function of fast balancing instantaneous load, and improving load balancing efficiency.

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a load balancing method according to an embodiment of the present invention;
FIG. 2 is a flowchart of a load balancing method according to an embodiment of the present invention;
FIG. 3 is a flowchart of a fast coordinating method according to an embodiment of the present invention;
FIG. 4 is a flowchart of a slow coordinating method according to an embodiment of the present invention;
FIG. 5 is a schematic block diagram of a network control node according to an embodiment of the present invention;
FIG. 6 is a schematic block diagram of a network control node according to another embodiment of the present invention;
FIG. 7 is a signaling flow diagram of a load balancing method according to another embodiment of the present invention;
FIG. 8 is a schematic flowchart of a load balancing method according to another embodiment of the present invention;
FIG. 9 is a schematic structural diagram of a load balancing apparatus according to another embodiment of the present invention;
FIG. 10 is a schematic structural diagram of a load balancing apparatus according to still another embodiment of the present invention;

FIG. 11 is a schematic structural diagram of a load balancing apparatus according to still another embodiment of the present invention;

FIG. 12 is a schematic structural diagram of a load balancing apparatus according to still another embodiment of the present invention;

FIG. 13 is a schematic structural diagram of a load balancing apparatus according to still another embodiment of the present invention;

FIG. 14 is a schematic structural diagram of a load balancing apparatus according to still another embodiment of the present invention;

FIG. 15 is a schematic structural diagram of a load balancing apparatus according to still another embodiment of the present invention;

FIG. 16 is a schematic flowchart of a load balancing method according to still another embodiment of the present invention; and

FIG. 17 is a schematic flowchart of a load balancing method according to still another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the present invention may be applied to various communications systems, such as the global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, a LTE time division duplex (Time Division Duplex, TDD) system, and a universal mobile telecommunications system (Universal Mobile Telecommunication System, UMTS).

It should also be understood that, in the embodiments of the present invention, a user equipment (User Equipment, UE) may be called a terminal (Terminal), a mobile station (Mobile Station, MS), a mobile terminal (Mobile Terminal), and the like, and the user equipment may communicate with one or more core networks by using a radio access network (Radio Access Network, RAN). For example, the user equipment may be a mobile phone (or called a "cellular" phone), a computer with a mobile terminal, and the like. For example, the user equipment may also be a portable, pocket-sized, handheld, computer built-in, or vehicle-mounted mobile apparatus, which exchanges voice and/or data with the radio access network.

In the embodiments of the present invention, a base station may be a base station (Base Transceiver Station, BTS) in GSM or CDMA, or may be a base station (NodeB, NB) in WCDMA, or may be an evolved base station (Evolutional Node B, eNB or e-NodeB) in LTE, which is not limited in the present invention. For convenience of description, the following embodiments are described by using a base station eNB and a user equipment UE as an example.

In the embodiments of the present invention, a network control node may be a base station, or may also be a centralized controller (Centralized Controller) at an upper layer of the base station. In different embodiments, the network control node represents a different node, and details are described in the following embodiments.

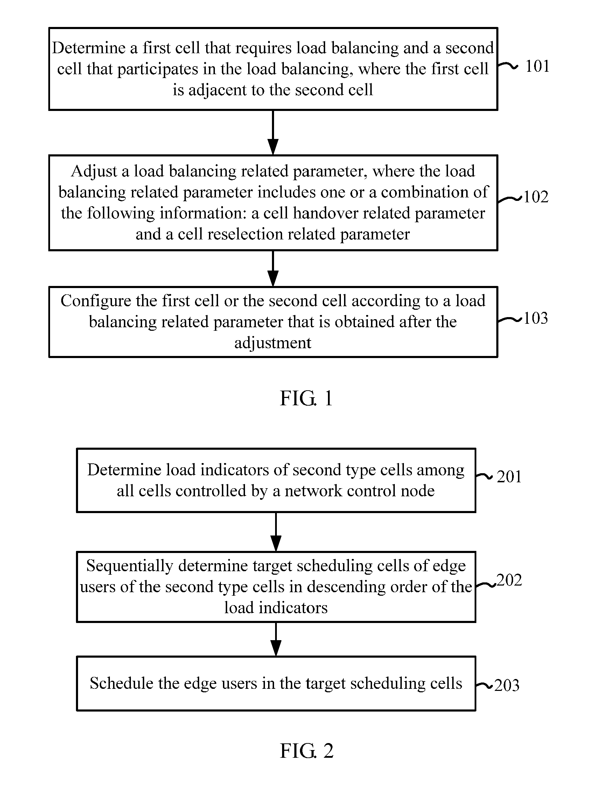

FIG. 1 is a flowchart of a load balancing method according to an embodiment of the present invention. The method in FIG. 1 is executed by a network control node, where the network control node may be a base station or a centralized controller.

101: Determine a first cell that requires load balancing and a second cell that participates in the load balancing, where the first cell is adjacent to the second cell.

102: Adjust a load balancing related parameter, where the load balancing related parameter includes one or a combination of the following information: a cell handover related parameter and a cell reselection related parameter.

103: Configure the first cell or the second cell according to a load balancing related parameter that is obtained after the adjustment.

In the embodiment of the present invention, a network control node collects and comprehensively considers load related information of all cells controlled by the network control node, and uses a load balancing related parameter that enables a total utility function to take an optimal value to perform load balancing for a network, so as to implement globally optimal load balancing.

In addition, the load balancing method of the embodiment of the present invention is for an intra-frequency cell. For an inter-frequency cell, a coverage user set that enables a total utility function to take an optimal value needs to be determined to perform load balancing for the network, where the coverage user set is used to determine a user that requires cell handover.

Optionally, as an embodiment, in a slow coordinating process, each cell controlled by the network control node periodically reports the following information to the network control node: a fast coordinating neighboring cell of the cell; a PRB utilization rate of the cell; a historical scheduling priority of the cell; and a scheduling rate, resource block allocation, a quantity of buffered data, a waiting delay, a QoS class identifier (QoS Class Identifier, QCI) type, a modulation and coding scheme (Modulation and Coding Scheme, MCS), and reference signal received power (Reference Signal Received Power, RSRP) of each user in the cell. Optionally, a quantity of scheduled data in the cell and information reported by a user, such as a channel quality indicator (Channel Quality Indicator, CQI), channel state information (Channel State Information, CSI), reference signal received quality (Reference Signal Received Quality, RSRQ), and a received signal strength indicator (Received Signal Strength Indicator, RSSI), may also be reported.

Optionally, as another embodiment, the centralized controller determines, according to the collected load related information, a cell whose load exceeds a threshold, and excludes a fast coordinating cell according to the fast coordinating neighboring cell that is of the cell and is in the load related information, so as to determine a first type cell, namely, a slow coordinating cell. Then, a power configuration and a coverage configuration of each cell that enable the total utility function to take the optimal value may be determined by using a traversal method. The power configuration may be a transmit power spectrum of each cell on different time-frequency resources, and the coverage configuration may be an adjusting parameter of trigger conditions for performing cell handover and cell reselection.

Optionally, as another embodiment, that the network control node adjusts a load balancing related parameter in step 102 includes: determining, according to the load related information, a total utility function controlled by the network control node; and determining a load balancing related parameter that can enable the total utility function to take a maximum value or a minimum value. The total utility function may include: a weighted sum of scheduling rates of all users in the first type cell, or a sum of scheduling priorities of all first type cells. Herein, a scheduling rate of a user is a historical scheduling rate of the user within a period of time, and the weighted sum of the scheduling rates of all the users can reflect an overall load level of a network formed by slow coordinating cells. In addition, a priority of a user scheduled on a time-frequency resource of a cell may be used as a priority on the time-frequency resource, and a scheduling priority of the cell is an average value of priorities on all time-frequency resources within a period of time, and may be used to represent a load level of the cell, and can represent the overall load level of the network as well after summation.

Optionally, the determining a load balancing related parameter that can enable the total utility function to take a maximum value or a minimum value may include: determining a load balancing related parameter that can enable a weighted sum of scheduling rates of all users in the first type cell to take a maximum value; or determining a load balancing related parameter that can enable a sum of scheduling priorities of all first type cells to take a minimum value.

Optionally, the load balancing related parameter may include: a cell handover parameter, used to determine a trigger condition of cell handover; a cell reselection parameter, used to determine a trigger condition of cell reselection; and a transmit power spectrum, used to configure a transmit power value of a cell on each time-frequency resource.

Optionally, as another embodiment, all cells controlled by the network control node may include: a first type cell and a second type cell, where the first type cell is used to indicate inter-baseband unit BBU scheduled cells, and the second type cell is used to indicate intra-BBU scheduled cells. It may be understood that, fast coordinating cells that perform a fast coordinating process share a BBU, and slow coordinating cells that perform a slow coordinating process do not share a BBU; or, it may be understood that, cells that cannot perform fast coordination perform slow coordination.

Optionally, as another embodiment, the network control node determines load indicators of second type cells among all cells controlled by the network control node; sequentially determines target scheduling cells of edge users of the second type cells in descending order of the load indicators; and schedules the edge users in the target scheduling cells. Steps in the embodiment are steps of the fast coordinating process, and in this case, the network control node may be a base station.

Optionally, the foregoing load indicator may include: a highest scheduling priority of the second type cell, or a quantity of to-be-scheduled users with data in the second type cell.

Optionally, as another embodiment, the sequentially determining target scheduling cells of edge users of the second type cells in descending order of the load indicators includes: determining an edge user of a second type cell; sending scheduling related information of the edge user to a neighboring second type cell of the second type cell; and determining, according to the scheduling related information, that a cell that can enable a utility function to take a maximum value is the target scheduling cell of the edge user, where the target scheduling cell may be the second type cell or the neighboring second type cell. The utility function may include a sum of cell scheduling priorities of the second type cell and the neighboring second type cell. Herein, a cell scheduling priority is an average value of priorities on all time-frequency resources at a current moment.

Optionally, the foregoing scheduling related information may include: a channel state of a user, a scheduling rate of the user, a waiting delay of the user, and a QoS (Quality of Service) weight of the user. Specifically, the channel state of the user may be represented by using a CQI, a CSI, or the like. The scheduling rate is a historical average scheduling rate of the user. The QoS weight is jointly determined according to a user level and a user connection type level.

Optionally, as another embodiment, the scheduling the edge user in the target scheduling cell may include: sending resource allocation of the edge user in the target scheduling cell to the second type cell; and sending to-be-scheduled data of the edge user to the target scheduling cell according to the resource allocation.

FIG. 2 is a flowchart of a load balancing method according to an embodiment of the present invention. The method of FIG. 2 is executed by a network control node, where the network control node may be a base station or a centralized controller.

201: Determine load indicators of second type cells among all cells controlled by a network control node.

In a fast coordinating process, the network control node may be a base station. A load indicator of a fast coordinating cell may include a highest scheduling priority of the fast coordinating cell or a quantity of to-be-scheduled users with data. A scheduling priority of a user with a highest scheduling priority in the fast coordinating cell may be used as the highest scheduling priority of the fast coordinating cell, and is used to reflect a load level of the cell.

202: Sequentially determine target scheduling cells of edge users of the second type cells in descending order of the load indicators.

The sequentially determining target scheduling cells of edge users of the second type cells in descending order of the load indicators includes: determining an edge user of a second type cell; sending scheduling related information of the edge user to a neighboring second type cell of the second type cell; and determining, according to the scheduling related information, that a neighboring second type cell that can enable a utility function to take a maximum value as the target scheduling cell of the edge user. The utility function may include a sum of cell scheduling priorities of the second type cell and the neighboring second type cell. The scheduling related information may include a channel state of a user, a scheduling rate of the user, a waiting delay of the user, and a QoS weight of the user. The channel state of the user may be represented by using a CQI or CSI.

203: Schedule the edge users in the target scheduling cells.

Resource allocation of an edge user in a target scheduling cell is sent to a second type cell; and to-be-scheduled data of the edge user is sent to the target scheduling cell according to the resource allocation.

In the embodiment of the present invention, a network control node collects and comprehensively considers load related information of all cells controlled by the network control node, and performs load balancing for a network by using a load balancing related parameter that can enable a total utility function or a utility function to take an optimal value, so as to implement globally optimal load balancing.

Optionally, as an embodiment, all cells controlled by the network control node may include: a first type cell and a second type cell, where the first type cell is used to indicate inter-baseband unit BBU scheduled cells, and the second type cell is used to indicate intra-BBU scheduled cells. It may be understood that, fast coordinating cells that perform a fast coordinating process share a BBU, and slow coordinating cells that perform a slow coordinating process do not share a BBU; or, it may be understood that, cells that cannot perform fast coordination perform slow coordination.

Optionally, as another embodiment, load related information reported by each cell among all the cells controlled by the network control node is received; the first type cell and a load balancing related parameter of the first type cell are determined according to the load related information; and the load balancing related parameter is sent to the first type cell.

Optionally, the determining, according to the load related information, the first type cell and a load balancing related parameter of the first type cell may include: determining a total utility function of the first type cell according to the load related information; and determining a load balancing related parameter that can enable the total utility function to take a maximum value or a minimum value. The total utility function may include: a weighted sum of scheduling rates of all users in the first type cell, or a sum of scheduling priorities of all cells of the first type cell.

Optionally, the determining a load balancing related parameter that can enable the total utility function to take a maximum value or a minimum value includes: determining a load balancing related parameter that can enable a weighted sum of scheduling rates of all users in the first type cell to take a maximum value; or determining a load balancing related parameter that can enable a sum of scheduling priorities of all cells of the first type cell to take a minimum value. The load balancing related parameter may include: a cell handover parameter, used to determine a trigger condition of cell handover; a cell reselection parameter, used to determine a trigger condition of cell reselection; and a transmit power spectrum, used to configure a transmit power value of a cell on each time-frequency resource.

Optionally, the load related information may include: a second type cell in neighboring cells of the cell; a PRB utilization rate of the cell; a historical scheduling priority of the cell; and a scheduling rate, RB allocation, a quantity of buffered data, a waiting delay, a QCI type, a modulation and coding configuration MCS, and RSRP of each user in the cell. In addition, the load related information may further include: a quantity of scheduled data in the cell; and CSI, RSRQ, and an RSSI that are reported by each user in the cell.

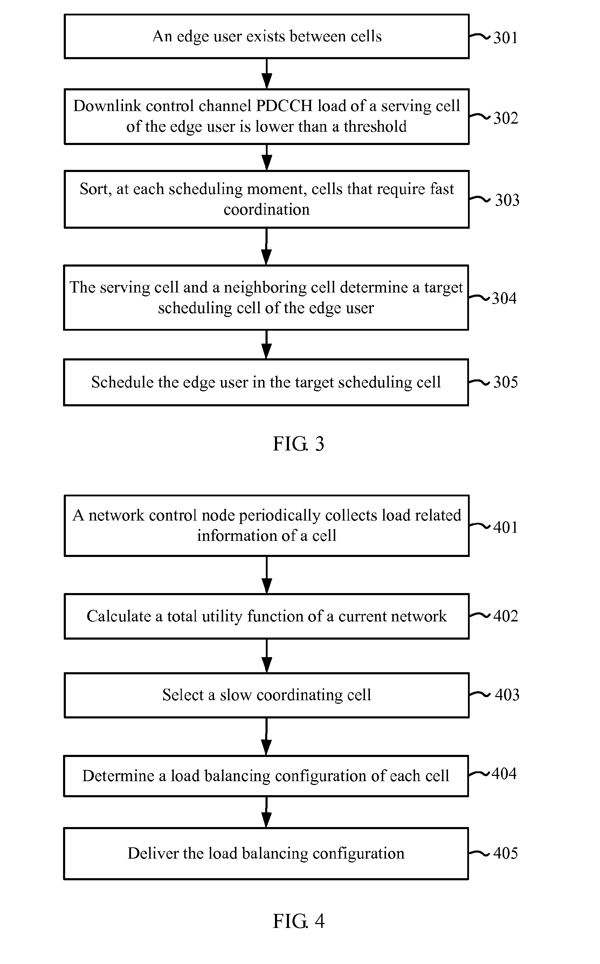

FIG. 3 is a flowchart of a fast coordinating method according to an embodiment of the present invention. The method of FIG. 3 may be executed by a base station.

When a communication link with a high capacity and a low delay exists among a plurality of cells, and user data can be shared and kept synchronized, it is considered that the cells meet a fast coordinating condition. A specific application scenario may be all cells with centralized baseband units (Baseband Unit, BBU), or all cells under a same base station. The scenario with the centralized BBUs is generally applied to an scenario, such as indoor coverage of a large venue, or a dense urban area, where characteristics are that: the base station is divided into two parts: a near end, namely, the BBU, and a remote end, namely, a radio remote module (Radio Remote Unit, RRU); the BBU may be installed in a suitable position in an equipment room, and the RRU may be installed at an antenna end; and one BBU may be connected to a plurality of RRUs, and the BBU and the RRU are connected by using an optical fiber, which meets a requirement for a communication link with a high capacity and a low delay. In a scenario with a same base station, communication among a plurality of cells controlled by the base station is performed inside the base station, which also meets the fast coordinating condition. It should be understood that, an application scenario of the embodiment of the present invention is not limited thereto, and all scenarios meeting the foregoing fast coordinating condition shall fall within the protection scope of the present invention.

301: An edge user exists between cells.

A base station periodically detects, according to a measurement report reported by a user in a cell, whether an edge user exists between the cells. The measurement report may include one or more of RSRP, RSRQ, and an RSSI. For example, if a difference between RSRP that is of a serving cell and is reported by a user and RSRP of a neighboring cell is lower than a threshold, it is determined that the user is an edge user. The threshold for determining an edge user may be pre-defined by a system. When an edge user exists between fast coordinating cells, the following step 302 is executed. When no edge user exists between the fast coordinating cells, the current step is repeated.

302: Downlink control channel PDCCH load of a serving cell of the edge user is lower than a threshold.

When an edge user exists between the fast coordinating cells, the base station detects the PDCCH load, namely, a CCE utilization rate, of the serving cell of the edge user. If the CCE utilization rate of the serving cell is lower than a threshold, a fast coordinating process between the serving cell and a neighboring cell is triggered. The threshold for determining a CCE utilization rate may be pre-defined by the system.

It can be understood that, a PDCCH is used to bear downlink control signaling. The cell can correctly indicate a PDSCH scheduling result of a neighboring cell only when the PDCCH load is low, that is, the fast coordinating flow can be performed.

303: Sort, at each scheduling moment, cells that require fast coordination.

After determining cells that require and can perform fast coordination, the base station may sort, according to a certain load indicator, all cells that require and can perform fast coordination. The load indicator is used to represent a load level of a cell, and specifically, may be a highest scheduling priority of the cell or a quantity of to-be-scheduled users with data in a buffer of the cell. A highest scheduling priority in all scheduling priorities of users in the cell may be used as the highest scheduling priority of the cell. A higher load level of the cell indicates a higher highest scheduling priority of the users in the cell. For example, a scheduling priority of a user may be determined by dividing an instantaneous rate by a historical scheduling rate, and is used to represent an instantaneous load requirement of the user. It should be understood that, a scheduling priority of a user may also adopt a waiting delay, a QCI, or the like as a weighted value, which is not limited in the present invention.

304: The serving cell and a neighboring cell determine a target scheduling cell of the edge user.

According to the sorting of the fast coordinating cells, starting from a most heavily loaded cell, a target scheduling cell of an edge user in a cell at a current moment is sequentially determined.

For an edge user that needs to be scheduled in a neighboring cell, a serving base station of the edge user transfers information such as a channel state and a scheduling rate to all neighboring cells that meet a fast coordinating condition. The channel state information may include a CQI, a CSI, and the like, and the scheduling rate may be a historical scheduling rate of the user in the serving cell.

A neighboring cell that receives scheduling related information needs to estimate an instantaneous rate that the edge user is scheduled in this neighboring cell. Specifically, the neighboring cell may perform estimation according to RSRP and RSRQ reported by the edge user, or perform estimation with reference to a full-bandwidth CQI and RSRP of the serving cell, or determine the instantaneous rate that the edge user is scheduled in the neighboring cell by using CSI that is directly reported by the user to the neighboring cell.

After that, the serving cell and the neighboring cell determine, by using a utility function, which neighboring cell serves a data channel of the user. The utility function may be a sum of scheduling priorities of each of current cells, and a neighboring cell that enables the utility function to take a maximum value may be selected as the target scheduling cell. Specifically, an expression of the utility function may be:

$$\sum_i f_i(x, y, z, ...),$$

where

a scheduling priority of a cell $i$ is $f_i(x,y,z,...)$, and a priority of a user with a highest priority in the cell at a current moment is used as a priority of the cell, which is used to represent an instantaneous load level of the cell. Input variables, such as x, y, and z, for user priority calculation are defined as: a user data packet waiting time delay; instantaneous spectral efficiency calculated under a current channel condition of the user; average spectral efficiency of the user within a period of time; a historical scheduling rate of the user; a QoS weight of the user, and the like.

It should be understood that, when the scheduling priority is used to represent the utility function, a cell scheduling priority instantaneous value represents a cell load instantaneous level, and an average value of cell scheduling priorities within a period of time represents an average load level of the cell within a period of time. The fast coordination lowers a long-term average load level of a network by coordinating network resources in real time and maximizing an instantaneous total utility value. Therefore, in a fast coordinating process, an objective is to maximize an instantaneous total utility function value; and in a slow coordinating process, an objective is to minimize an average total utility function value.

In addition, when the target scheduling cell of the data channel of the edge user is being determined, most suitable transmit power for the serving cell and the neighboring cell may also be coordinated according to the selected utility function. For example, when the user is scheduled in the neighboring cell, transmit power of the serving cell is lowered, so as to lower interference for this type of users. A PMI of the serving cell and the neighboring cell may also be coordinated according to the selected utility function, and interference between the two cells may be lowered by coordinating a space beam direction.

It should be understood that, when the cell where the UE is scheduled is being determined, negotiation may be performed once at a transmission time interval (Transmission Time Interval, TTI), and a frequency resource allocated to the user at a same moment only comes from one cell; or negotiation may also be performed once on each RBG at a TTI, and a frequency resource allocated to the user at a same moment may come from two cells.

305: Schedule the edge user in the target scheduling cell.

After the target scheduling cell of the edge user is determined, the target scheduling cell allocates a time-frequency resource to the edge user, and notifies the serving cell of the edge user of an allocation result of the time-frequency resource. The serving cell allocates a PDCCH resource to the edge user, and sends to-be-scheduled data of the edge user to the target scheduling cell. Then, a PDSCH of the target scheduling cell delivers the data to the edge user, and a PDCCH of the serving cell delivers a scheduling instruction to the edge user. It should be understood that, a plurality of edge users in a serving cell may be served by a related target scheduling cell at the same time. It should also be understood that, when the data channel of the user performs transmission in the target scheduling cell, a UE-specific reference signal (UE-specific Reference signal) is used, and a transmission mode is a single-antenna port (single-antenna port) or a multi-layer transmission mode based on the UE-specific reference signal. In addition, a same cell (the target scheduling cell) is selected for initial transmission and retransmission of the user, or retransmission is always performed in the serving cell. When adjusting an MCS according to an ACK/NACK feedback, the user maintains two sets of CQI adjustment amounts separately according to different scheduling cells for initial transmission.

In the embodiment of the present invention, in a scenario of sharing a BBU, a utility function of resource utilization is used as a load evaluation indicator, factors such as a usage situation of an air interface resource, a QoS requirement of a user service, and a channel situation of a user are comprehensively considered, and a target scheduling cell is dynamically determined for a fast coordinating cell. Load transferring is completed without a method of cell handover, thereby lowering granularity and a time delay of load balancing, implementing fast balancing for instantaneous load, and improving user experience.

FIG. 4 is a flowchart of a slow coordinating method according to an embodiment of the present invention. The method of FIG. 4 may be executed by a network control node.

When a plurality of cells do not meet a fast coordinating condition, the network control node may perform a slow coordinating process for this type of cells, where the network control node may include a centralized controller or a base station.

401: A network control node periodically collects load related information of a cell.

When a centralized controller exists in a network, all cells controlled by the centralized controller periodically report load related information to the centralized controller, where the load related information includes: a fast coordinating neighboring cell of a cell; a PRB utilization rate of the cell; a historical scheduling priority of the cell; a scheduling rate, resource block allocation, a quantity of buffered data, a waiting delay, a QCI type, an MCS, and RSRP of each user in the cell. Optionally, the load related information may further include: a quantity of scheduled data in the cell and information reported by a user, such as a CQI, CSI, RSRQ, and an RSSI.

When no centralized controller exists in a network, this step is executed by a base station, and a control base station of a cell periodically collects load related information of all neighboring cells.

402: Calculate a total utility function of a current network.

When the network control node finds, according to the load related information, that a cell whose load exceeds a threshold exists in the network, the network control node calculates the total utility function of the current network, where the total utility function may be a weighted sum of scheduling rates of all users in the network, or a sum of average scheduling priorities of all cells.

Specifically, the total utility function may be defined as: $\sum_i W(r_i)$, where:

a historical scheduling rate of a user $i$ is $r_i$, and $W(r_i)$ indicates a weighting manner for $r_i$, and optionally, the weighting manner is $\log(r_i)$, $r_i$ or the like. The formula indicates weighting and then adding up scheduling rates of all users in the network, and is used to measure an overall load level of the network.

The total utility function may also be defined as: $\sum_i \overline{f_i(x,y,z,...)}$, where:

a scheduling priority of a cell $i$ is $f_i(x,y,z,...)$, a priority of a user scheduled on a time-frequency resource (for example, a resource block group RBG) of a cell is used as a priority on the time-frequency resource. An average value $\overline{f_i(x,y,z,...)}$ of priorities on all time-frequency resources within a period of time is an average scheduling priority of the cell, and is used to represent an average load level of the cell. An averaging manner may be an arithmetic averaging or alpha filtering. Input variables, such as x, y, and z, for user priority calculation are defined as: a waiting delay of a user data packet; instantaneous spectral efficiency calculated under a current channel condition of the user; average spectral efficiency of the user within a period of time; a historical scheduling rate of the user; a QoS weight of the user, and the like.

403: Select a slow coordinating cell.

A cell whose load exceeds a threshold is selected according to the load related information reported by each cell in step 401. A cell whose load exceeds the threshold and that has not performed fast coordination is determined according to "a fast coordinating neighboring cell of a cell" in the load related information.

404: Determine a load balancing related parameter of each cell.

Then, by using the load related information reported by each cell in step 401 and the total utility function, a change of the total utility function of the network after a cell coverage scope and a transmit power spectrum are modified is estimated, and a configuration that enables the total utility function to take an optimal value is selected, where the optimal value refers to enabling a weighted sum of scheduling rates of all users in the network to be maximum, or enabling a sum of average scheduling priorities of all cells to be minimum.

A coverage scope of an intra-frequency cell may be adjusted by using a condition of cell handover and cell reselection. Specifically, a condition of cell handover is:

$$Mn + Ofn + Ocn - Hys > Ms + Ofs + Ocs + Off ,$$

where:

an adjusting parameter is *Ocn,* and *Ocn* is a specific cell offset of a neighboring cell, and acts on a UE in a connected state; *Mn* is a measurement result of the neighboring cell; *Ofn* is a specific frequency offset of a neighboring cell frequency; *Hys* is a hysteretic parameter; *Ms* is a measurement result of a serving cell; *Ofs* is a specific frequency offset of a serving cell frequency; *Ocs* is a specific cell offset of the serving cell; and *Off* is an offset parameter. *Mn* and *Ms* are in a unit of dBm in PSPR, and are in a unit of dB in PSPQ. *Ofn, Ocn, Ofs, Ocs, Hys,* and *Off* are all in a unit of dB.

Adjustment of reselection of an intra-frequency cell is:

$$Qmeans,n - Qoffset > Qmeans,s + Qhyst ,$$

where:

an adjusting parameter is *Qoffset,* and *Qoffset* is an offset value of a neighboring cell, and acts on a UE in an idle state; *Qmeans,n* is an RSRP measurement value of the neighboring cell for cell reselection; *Qmeans,s* is an RSRP measurement value of a serving cell for cell reselection; and *Qhyst* is used to indicate a hysteretic value, where *Qmeans,n* and *Qmeans,s* are in a unit of dBm, and *Qoffset* and *Qhyst* are in a unit of dB.

When determining the adjusting parameters for handover and cell reselection, the centralized controller may also determine a periodic transmit power spectrum of each cell, and specifically, determine a transmit power value of the cell in a specific period at each TTI and on each PRB.

For an inter-frequency cell, the centralized controller determines a set of users that require handover and a target inter-frequency cell.

That is, when a centralized controller exists in a network, the centralized controller estimates a change of an adjusted total utility function by adjusting parameters for handover and cell reselection and a transmit power spectrum of a cell, and determines a load balancing related parameter that enables the total utility function to take a maximum value (a weighted sum of scheduling rates of all users in the network) or a minimum value (a sum of average scheduling priorities of all cells) by using a traversal method or a certain type of search algorithm.

When no centralized controller exists in a network, a control base station of a heavily-loaded cell configures *Ocn* and *Offset* of all lightly-loaded intra-frequency neighboring cells according to a principle that a total utility function of a cell and all neighboring cells takes a maximum value, and may also determine a periodic transmit power spectrum of the cell and all lightly-loaded intra-frequency neighboring cells, and may also determine a set of users that initiate inter-frequency handover of the cell and a target inter-frequency cell.

405: Deliver the load balancing related parameter.

The network control node delivers the load balancing related parameter to each slow coordinating cell separately, and the slow coordinating cell adjusts the adjusting parameters for cell handover and cell reselection according to a load configuration, so as to adjust trigger conditions of cell handover and cell reselection. That is, a coverage configuration of the cell is adjusted.

In the embodiment of the present invention, in a scenario of not sharing a BBU, a total utility function of resource utilization is used as a load evaluation indicator, factors such as a usage situation of an air interface resource, a QoS requirement of a user service, and a channel situation of a user are comprehensively considered, and a load balancing related parameter that can enable the total utility function to take an optimal value is dynamically determined for a slow coordinating cell, thereby implementing globally optimal load balancing.

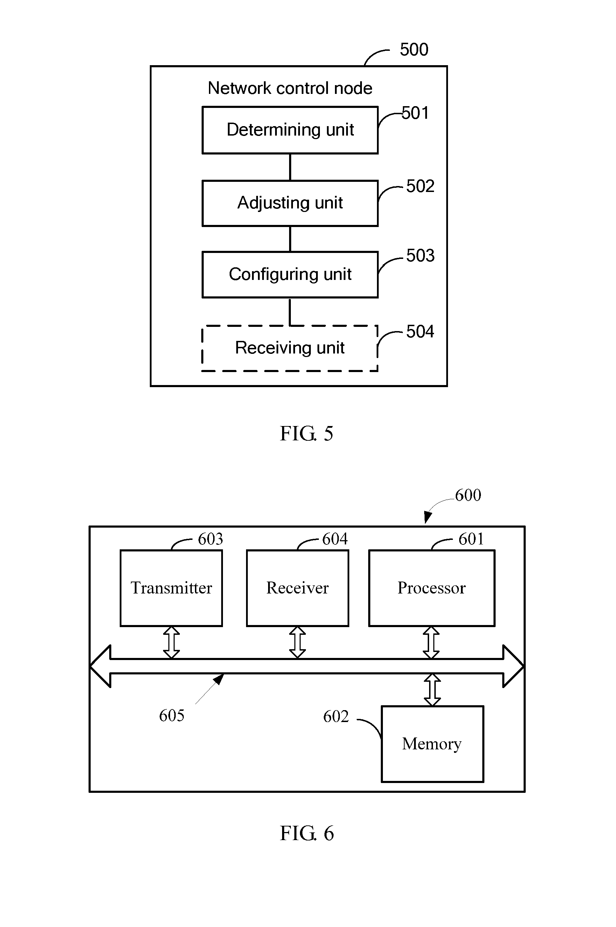

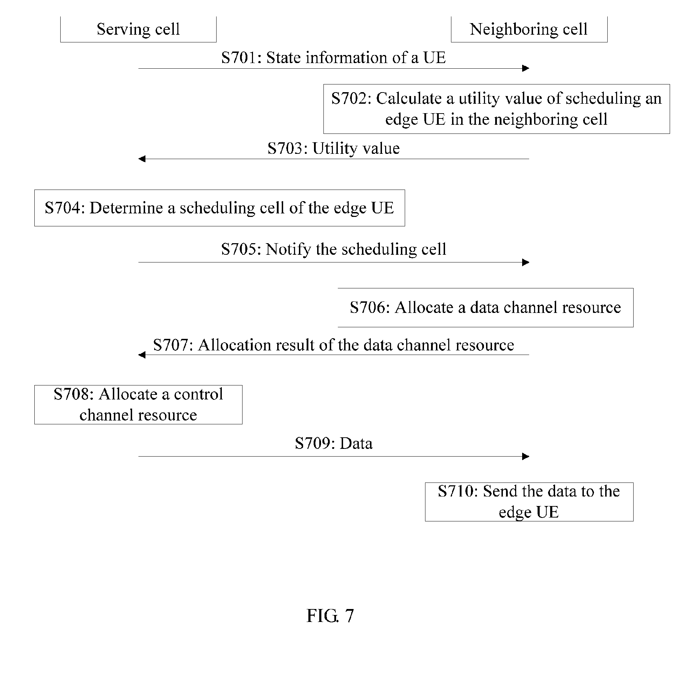

FIG. 5 is a schematic block diagram of a network control node according to an embodiment of the present invention. As shown in FIG. 7, a network control node 500 may include a determining unit 501, an adjusting unit 502, and a configuring unit 503.

The determining unit 501 determines a first cell that requires load balancing and a second cell that participates in the load balancing, where the first cell is adjacent to the second cell. The adjusting unit 502 adjusts a load balancing related parameter, where the load balancing related parameter includes one or a combination of the following information: a cell handover related parameter and a cell reselection related parameter. The configuring unit 503 configures the first cell or the second cell according to a load balancing related parameter that is obtained after the adjustment.

In the embodiment of the present invention, a network control node collects and comprehensively considers load related information of all cells controlled by the network control node, and performs load balancing for a network by using a load balancing related parameter that can enable a total utility function or a utility function to take an optimal value, so as to implement globally optimal load balancing.

The network control node 500 is capable of executing steps of the method embodiments from FIG. 1 to FIG. 4, and to avoid repetition, details are not described again.

Optionally, as an embodiment, the determining unit 501 is specifically configured to: determine, according to the load related information, a total utility function controlled by the network control node; and determine a load balancing related parameter that can enable the total utility function to take a maximum value or a minimum value. The total utility function includes: a weighted sum of scheduling rates of all users controlled by the network control node, or a sum of scheduling priorities of all cells controlled by the network control node.

Optionally, as another embodiment, the determining unit 501 is specifically configured to: determine a load balancing related parameter that can enable a weighted sum of scheduling rates of all users in a first type cell to take a maximum value; or determine a load balancing related parameter that can enable a sum of scheduling priorities of all cells of a first type cell to take a minimum value. The load balancing related parameter includes: a cell handover parameter, used to determine a trigger condition of cell handover; a cell reselection parameter, used to determine a trigger condition of cell reselection; and a transmit power spectrum, used to configure a transmit power value of a cell on each time-frequency resource. The load related information includes: a second type cell among neighboring cells of the cell; a PRB utilization rate of the cell; a historical scheduling priority of the cell; and a scheduling rate, RB allocation, a quantity of buffered data, a waiting delay, a QCI type, a modulation and coding configuration MCS, and RSRP of each user in the cell. The load related information further includes at least one of the following: a quantity of scheduled data in the cell; and CSI, RSRQ, and an RSSI that are reported by each user in the cell.

Therefore, in the embodiment of the present invention, in a scenario of not sharing a BBU, a total utility function of resource utilization is used as a load evaluation indicator, factors such as a usage situation of an air interface resource, a QoS requirement of a user service, and a channel situation of a user are comprehensively considered, and a load balancing related parameter that can enable the total utility function to take an optimal value is dynamically determined for a slow coordinating cell, thereby implementing globally optimal load balancing.

Further, in the embodiment of the present invention, in a scenario of sharing a BBU, a utility function of resource utilization is used as a load evaluation indicator, factors such as a usage situation of an air interface resource, a QoS requirement of a user service, and a channel situation of a user are comprehensively considered, and a target scheduling cell is dynamically determined for a fast coordinating cell. Load transferring is completed without a method of cell handover, thereby lowering granularity and a time delay of load balancing, implementing fast balancing for instantaneous load, and improving user experience.

FIG. 6 is a schematic block diagram of a network control node according to another embodiment of the present invention. A network control node 600 of FIG. 6 includes a processor 601, a memory 602, a transmitter 603, and a receiver 604. The processor 601, memory 602, transmitter 603, and receiver 604 are connected through a bus system 605.

The memory 602 is configured to store instructions that enable the processor 601 to execute the following operations: receiving load related information reported by each cell of all cells controlled by the network control node 600; determining a first type cell and a load balancing related parameter of the first type cell according to the load related information; and sending the load balancing related parameter to the first type cell.

Based on the foregoing technical solutions, a network control node collects and comprehensively considers load related information of all cells controlled by the network control node, and performs load balancing for a network by using a load balancing related parameter that can enable a total utility function or a utility function to take an optimal value, so as to implement globally optimal load balancing.

The processor 601 controls an operation of the network control node 600, and the processor 601 may also be called a central processing unit (Central Processing Unit, CPU). The memory 602 may include a read-only memory and a random access memory, and provides an instruction and data for the processor 601. A part of the memory 602 may further include a non-volatile random access memory (NVRAM). In a specific application, components of the network control node 600 are coupled together through the bus system 605, where the bus system 605 may further include a power bus, a control bus, a state signal bus, and the like in addition to a data bus. However, for clear description, all kinds of buses in the figure are marked as the bus system 605.

The methods disclosed in the foregoing embodiments of the present invention may be applied to the processor 601, or be implemented by the processor 601. The processor 601 may be a type of integrated circuit chip and has a signal processing capability. In an implementation process, steps of the foregoing methods may be executed by an integrated logic circuit of hardware in the processor 601 or by instructions in a software form. The foregoing processor 601 may be a general processor, a digital signal processor (DSP), an application-specific integrated circuit (ASIC), a field programmable gate array (FPGA) or another programmable logic device, a discrete gate or transistor logic device, or a discrete hardware component, and may implement or execute the methods, steps, and logical block diagrams that are disclosed in the embodiments of the present invention. The general processor may be a microprocessor, or the processor may also be any conventional processor and the like. The steps of the methods disclosed in the embodiments of the present invention may be directly embodied as being executed by a hardware decoding processor, or being executed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 602, and the processor 601 reads information in the memory 602, and executes the steps of the foregoing methods in combination with the hardware of the processor.

The fast coordinating process described in the foregoing embodiments is applicable to load balancing among a plurality of cells, where a communication link with a high capacity and a low time delay exists among the cells, and enables sharing and synchronization of UE data in the cells. For example, the plurality of cells may be all cells under a same base station (for example, an eNB), all cells under eNBs with X2 interfaces high-speed interconnected with each other, or all cells under BBU-centralized control. The BBU-centralized control refers to that: BBUs of these cells are centrally deployed, and the BBUs may be connected with each other through a high-speed interconnection bus. It should be noted that, a structure with the BBUs centrally deployed is considered as a base station, and a radio-frequency structure (for example, an RRU) of the base station may be remoted by using an optical fiber.

The following describes a load balancing method of fast coordination in detail with reference to the accompanying drawings. The method is applied to load balancing among a plurality of cells, where a communication link with a high capacity and a low time delay exists between the cells, and enables sharing and synchronization of UE data in the cells. For example, the plurality of cells may be all cells under a same base station (for example, an eNB), all cells served by eNBs with X2 interfaces that are high-speed interconnected with each other, or all cells controlled by a BBU in a centralized manner. In this way, these cells may transfer a load situation of the cells, scheduling information and scheduled data of a UE, and the like by using message exchange, so that in a case of being transparent to the UE, an objective of load balancing is achieved by automatic fast coordinating and scheduling without handover.

Specifically, refer to FIG. 7, which is a signaling flow diagram of a load balancing method according to still another embodiment of the present invention. In this embodiment, load of an edge UE is transferred to a cell with light load by coordinating a scheduling cell of the edge UE between neighboring cells, so as to implement load balancing.

As shown in FIG. 7, an edge UE exists in a serving cell, and more than one neighboring cells of the serving cell may exist. In order to select a suitable neighboring cell for the edge UE, the serving cell and a neighboring cell exchange state information of the edge UE, so that the neighboring cell can calculate, according to the state information of the edge UE, a scheduling utility value of the edge UE in the neighboring cell. Therefore, an optimal neighboring cell is selected as the scheduling cell of the edge UE according to a utility value of each neighboring cell. Then, the scheduling cell is instructed to allocate a data channel for the edge UE, and a control channel is retained in the serving cell and is not handed over. In this way, in a case of being transparent to the UE, an objective of load balancing is achieved by automatic fast coordinating and scheduling without handover. Specifically, the method may include the following steps:

> S701: An entity in which a serving cell is located sends state information of an edge UE in the serving cell to an entity in which a neighboring cell of the serving cell is located.
> S702: The entity in which the neighboring cell is located calculates, according to the state information of the edge UE in the serving cell, a utility value of scheduling the edge UE in the neighboring cell. S703: The entity in which the neighboring cell is located sends the utility value obtained by calculation to the entity in which the serving cell is located.
> S704: The entity in which the serving cell is located determines, according to the scheduling utility value of the edge UE in the neighboring cell, a scheduling cell of the edge UE. In this case, the scheduling cell of the edge UE may be determined by taking a load situation of the serving cell into consideration. Certainly, the determined scheduling cell may be the serving cell itself. In this embodiment, the determined scheduling cell is a certain neighboring cell of the serving cell rather than the serving cell itself. If the determined scheduling cell is the serving cell itself, subsequent scheduling for the UE is the same as that in the prior art, and details are not repeatedly described herein.
> S705: The entity in which the serving cell is located instructs an entity in which the scheduling cell is located to allocate a data channel resource for the edge UE.
> S706: The entity in which the scheduling cell is located allocates a data channel resource for the edge UE.
> S707: The entity in which the scheduling cell is located notifies the entity in which the serving cell is located of an allocation result of the data channel resource.
> S708: The entity in which the serving cell is located allocates a control channel resource for the edge UE according to the allocation result of the data channel resource.
> S709: The entity in which the serving cell is located sends to-be-sent data of the edge UE to the entity in which the scheduling cell is located.
> S710: The entity in which the scheduling cell is located sends the data to the edge UE by using the data channel resource allocated in the scheduling cell.

The entity in which the neighboring cell is located notifies, by using information, the entity in which the serving cell is located of a position of the allocated data channel resource and a used transmission format, so that the serving cell schedules the control channel resource according to the position of the allocated data channel resource and the used transmission format, and sends to-be-scheduled data of the edge UE to the neighboring cell.

The foregoing state information of the edge UE in the serving cell may include information such as a channel state and a scheduling rate. The channel state may be, for example, one or more pieces of the following information reported by the edge UE: reference signal received power (Reference Signal Received Power, RSRP), reference signal received quality (Reference Signal Received Quality, RSRQ), a received signal strength indicator (Received Signal Strength Indicator, RSSI), and channel state information (Channel State Information, CSI), such as a channel quality indicator (Channel Quality Indicator, CQI). In addition, the state information may further include one or more pieces of the following information: a scheduling modulation and coding scheme (Modulation and Coding Scheme, MCS), a QoS weight, and a QoS class identifier (QoS Class Identifier, QCI), and the like.

When the edge UE is scheduled in the neighboring cell, an instantaneous rate may be estimated according to RSRP or RSRQ reported by the edge UE in the neighboring cell, or is estimated with reference to a full-bandwidth CQI and RSRP of the serving cell, or is estimated according to CSI that is of a neighboring cell and is directly reported by the edge UE.

On each scheduled time-frequency resource, the serving cell and the neighboring cell determine, according to a selected utility function, which cell serves the data channel of the edge UE. The utility function may be a sum of scheduling priorities of each cell on the time-frequency resource, where for the scheduling priority of each cell, a priority of a UE with a highest priority in the cell may be used as the priority of the cell. When edge UEs are sorted in the serving cell, it is possible that a UE with a highest priority is scheduled in the serving cell, and the neighboring cell schedules other UEs; and when edge UEs are sorted in the neighboring cell, it is possible that a UE with a highest priority is scheduled in the neighboring cell, and the serving cell schedules other UEs. The scheduling cell of the edge UE is selected, so that a sum of scheduling priorities of the serving cell and the neighboring cell is maximized.

When the scheduling cell of the data channel of the edge UE is being determined, most suitable transmit power for the serving cell and the neighboring cell may also be coordinated according to the selected utility function. For example, if transmit power of the serving cell is lowered, a scheduling priority of the serving cell is lowered; but if the UE scheduled by the neighboring cell is subject to interference of the serving cell, a scheduling priority of the neighboring cell improves. A suitable power configuration is selected, so that a sum of scheduling priorities of the serving cell and the neighboring cell is maximized. In this way, when the UE is scheduled in the neighboring cell, the transmit power of the serving cell is lowered, so as to lower interference on this type of users.

When the scheduling cell of the data channel of the edge UE is being determined, a precoding matrix indicator (Precoding Matrix Indicator, PMI) for the serving cell and the neighboring cell may also be coordinated according to the selected utility function. A reason is that, scheduling spectral efficiency of the edge UE changes according to a PMI of the serving cell and a PMI of the neighboring cell, thereby affecting magnitude of the scheduling priority; and spectral efficiency of scheduling the edge UE in the neighboring cell also changes according to a serving PMI and an interference PMI, thereby affecting magnitude of the scheduling priority. A suitable PMI combination of each cell is selected, so that a sum of scheduling priorities of the serving cell and the neighboring cell is maximized. Specifically, interference between two cells may be lowered by coordinating a space beam direction.

When the cell where the UE is scheduled is being determined, negotiation may be performed once at a transmission time interval (Transmission Time Interval, TTI), and a frequency resource allocated to the UE at a same moment only comes from one cell; or negotiation may also be performed once on each RBG at a TTI, and a frequency resource allocated to the user at a same moment may come from two cells.

In addition, when the data channel of the edge UE is handed over to the neighboring cell, a UE-specific reference signal (UE-specific Reference signal) may be used, and a transmission mode is a single-antenna port (single-antenna port) or a multi-layer transmission mode based on the UE-specific reference signal. A same cell may be selected for initial transmission and retransmission of the UE, for example, both initial transmission and retransmission are performed in the scheduling cell; or initial transmission is performed in the scheduling cell, and retransmission is always performed in the serving cell. When adjusting an MCS according to an ACK/NACK feedback, the UE may maintain two sets of CQI adjustment amounts separately according to different scheduling cells for initial transmission.

It can be known from the foregoing descriptions that, when a communication link with a high capacity and a low time delay exists among a plurality of cells, and user data can be shared and kept synchronized, it is considered that these cells meet a fast coordinating condition. For example, the plurality of cells may be all cells under a same base station (for example, an eNB), all cells served by eNBs with X2 interfaces that are high-speed interconnected with each other, or all cells controlled by a BBU in a centralized manner. Among these cells, more than one cell may have edge UEs, and the following embodiments consider, as a whole, starting load balancing from an edge UE of which cell, so as to finally achieve an optimal effect of load balancing.

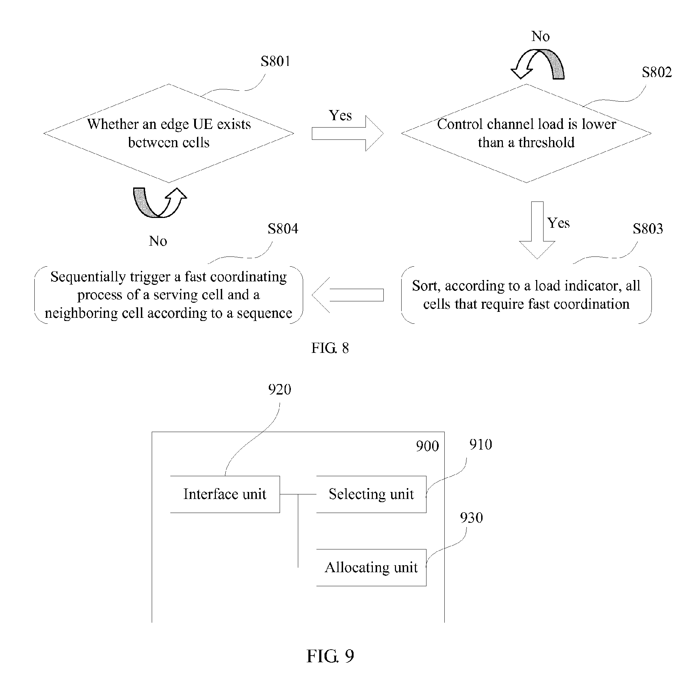

Refer to FIG. 8, which is a schematic flowchart of a load balancing method according to still another embodiment of the present invention. As shown in FIG. 8, the method includes the following steps:

S801: Determine whether an edge UE exists between cells that meet a fast coordinating condition.

S802: When an edge UE exists between the cells that meet a fast coordinating condition, check a control channel load of a serving cell of the edge UE. If the control channel load is lower than a threshold, it indicates that a control channel of the serving cell has a spare resource, and therefore, the serving cell is a cell that requires fast coordination. In this way, at least one cell that requires fast coordination is determined. Then, step S803 is performed.

S803: Sort, at each scheduling moment, all cells that require fast coordination according to a load indicator, where the load indicator may be a highest scheduling priority of a cell, or a quantity of to-be-scheduled UEs with data. Load balancing is performed from a most heavily loaded cell.

S804: Sequentially trigger a fast coordinating process of the serving cell and a neighboring cell according to a sequence determined in step S803. Details of the fast coordinating process are described in FIG. 7, and are not repeatedly described herein.

It should be noted that, in the foregoing step S801, the edge UE may be determined by using RSRP of the serving cell and RSRP of a neighboring cell. For example, if a difference between RSRP of a serving cell of a certain UE and RSRP of a neighboring cell is lower than a preset value, the UE is an edge UE. Certainly, there are many manners for determining the edge UE, which are well-known by a person skilled in the art, and details are not repeatedly described herein.

In addition, the foregoing step S802 may be performed before step S804. In other words, it may be determined, after the sorting is performed and when fast coordination is triggered, whether the control channel load of the serving cell of the edge UE is lower than the threshold, which means, it is determined whether control channel resources are sufficient; and when the control channel resources are sufficient, the fast coordinating process of the serving cell and the neighboring cell is triggered. It needs to be noted that, the control channel load may be determined by using a control channel element (Control Channel Element, CCE) utilization rate. In addition, the threshold of the control channel load may be set according to a specification of allowing fast coordination, for example, what proportion of UEs are allowed to be scheduled in a neighboring cell at each TTI. Certainly, a person skilled in the art may set the threshold of the control channel load according to a specific requirement, which is not limited in the embodiment of the present invention.

Refer to FIG. 9, which is a schematic structural diagram of a load balancing apparatus according to still another embodiment of the present invention. The load balancing apparatus is located at a first entity in which a serving cell of an edge UE is located. As shown in FIG. 9, the apparatus 900 includes a selecting unit 910, an interface unit 920, and an allocating unit 930. The selecting unit 910 is configured to select a scheduling cell for the edge UE from a neighboring cell of the serving cell, where an entity in which the scheduling cell is located is a second entity. The interface unit 920 is configured to perform interaction with the second entity, including instructing the second entity to allocate, in the scheduling cell, a data channel resource for the edge UE, and is configured to receive an allocation result that is of the data channel resource and is sent by the second entity. The allocating unit 930 is configured to allocate, in the serving cell, a control channel resource for the edge UE according to the allocation result of the data channel resource. Further, the interface unit 920 is further configured to send data of the edge UE to the second entity, so as to send the data of the edge UE to the edge UE by using the allocated data channel resource.

It can be seen that, in the foregoing embodiment, a serving cell instructs a scheduling cell to allocate a data channel for an edge UE, and a control channel is retained in the serving cell and is not handed over. In this way, in a case of being transparent to the UE, an objective of load balancing is achieved by automatic fast coordinating and scheduling without handover.

A manner in which the selecting unit 910 selects the scheduling cell may be implemented by comparing scheduling utility values of edge UEs in neighboring cells. Specifically, the interface unit 920 may obtain a scheduling utility value of the edge UE in each neighboring cell of the serving cell, and the selecting unit selects, according to the scheduling utility value of the edge UE in each neighboring cell, a cell with an optimal utility value from the neighboring cells as the scheduling cell. The scheduling utility value of the edge UE in each neighboring cell is determined, according to state information of the edge UE in the serving cell, by an entity in which the neighboring cell is located. Specifically, reference may be made to the foregoing embodiments, and details are not repeatedly described herein.

In addition, it can be known from the foregoing descriptions that, among the serving cell and neighboring cells of the serving cell, a plurality of cells may have edge UEs. Optionally, load balancing may be performed from an edge UE of a most heavily loaded cell, so as to finally achieve an optimal effect of load balancing.

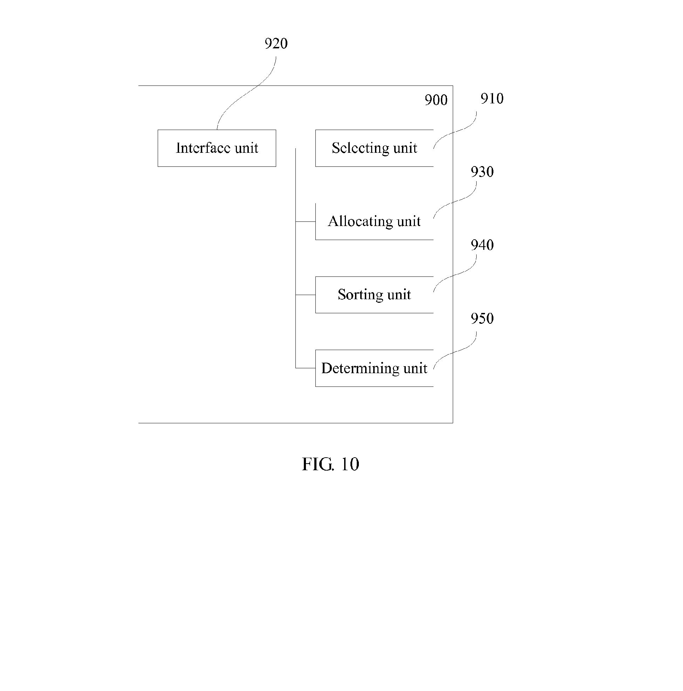

In this case, refer to FIG. 10. The load balancing apparatus 900 may further include a sorting unit 940 and a determining unit 950. The sorting unit 940 is configured to sort all cells that meet a condition according to a load indicator, and the determining unit 950 is configured to determine that an edge UE in a most heavily loaded cell is a current to-be-scheduled edge UE. The met condition is that a capacity and a time delay of a communication link between cells enable sharing and synchronization of UE data between the cells. Descriptions about the load indicator are the same as those in the foregoing embodiments, and details are not repeatedly described herein.

Optionally, when fast coordination is triggered, namely, before the scheduling cell is selected for the edge UE, it may be first determined whether a control channel load of a serving cell of the edge UE is lower than a threshold, that is, whether control channel resources are sufficient; and when the control channel resources are sufficient, a fast coordinating process of the serving cell and a neighboring cell is triggered.

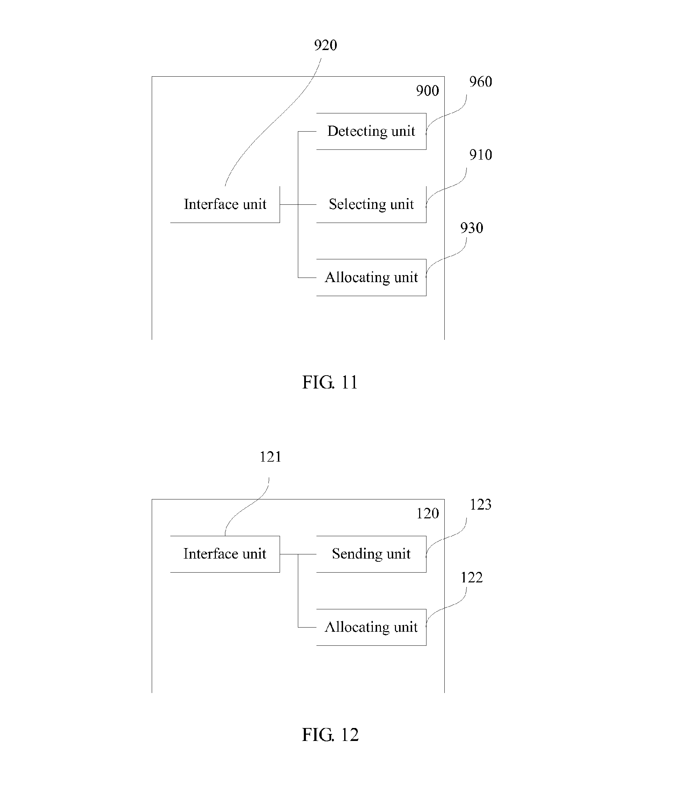

Refer to FIG. 11. In this case, the load balancing apparatus 900 may further include a detecting unit 960, configured to detect the control channel load of the serving cell of the edge UE; and a selecting unit 910 is further configured to, when the control channel load is lower than a threshold, select a scheduling cell for the edge UE.

Same as the foregoing embodiments, a control channel in this embodiment may be a PDCCH, and a data channel may be a PDSCH.

It should be noted that, an interface unit 920 in this embodiment may be an interface circuit inside a base station, or may also be an X2 interface. For example, when the serving cell and the scheduling cell are cells under a same base station or cells controlled by a BBU in a centralized manner, the interface unit 920 may be an interface circuit inside the base station or an interface of a high-speed interconnection bus between BBUs. When the serving cell and the scheduling cell are cells under different base stations, the interface unit 920 may be an X2 interface. The selecting unit 910 may be an independently disposed processor, or may also be integrated in a certain processor of a base station, and in addition, may further be stored in a memory of a base station in a form of program code, where a processor of the base station invokes the program code and executes a function of the selecting unit 910. Each unit of an allocating unit 930, a sorting unit 940, a determining unit 950, and the detecting unit 960 may be implemented in a same way as the selecting unit 910, and may be integrated together with the selecting unit 910, or may also be implemented independently. The processor herein may be a central processing unit (Central Processing Unit, CPU), or an application specific integrated circuit (Application Specific Integrated Circuit, ASIC), or one or more integrated circuits configured to implement the embodiment of the present invention.

Refer to FIG. 12, which is a schematic structural diagram of a load balancing apparatus according to still another embodiment of the present invention. The load balancing apparatus is located at a second entity in which a scheduling cell of an edge UE is located, and the apparatus 120 includes an interface unit 121, an allocating unit 122, and a sending unit 123. The interface unit 121 is configured to receive a notification message sent by a first entity, where the first entity is an entity in which a serving cell of the edge UE is located, and the notification message is sent to the second entity by the first entity after the first entity selects the scheduling cell for the edge UE from a neighboring cell of the serving cell, and is configured to instruct the second entity to allocate a data channel resource for the edge UE; the allocating unit 122 is configured to allocate, in the scheduling cell, a data channel resource for the edge UE according to the notification message; and the interface unit 121 is further configured to send an allocation result of the data channel resource to the first entity, so that the first entity allocates, in the serving cell, a control channel resource for the edge UE according to the allocation result of the data channel resource, and sends data of the edge UE to the second entity, and further configured to receive the data of the edge UE; and the sending unit 123 is configured to send the data to the edge UE by using the allocated data channel resource.

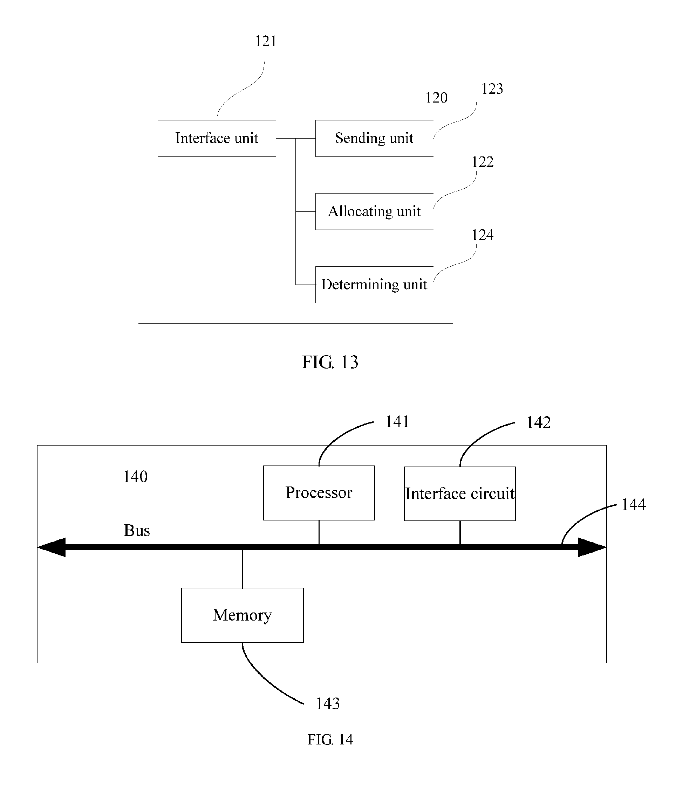

A manner in which the first entity selects the scheduling cell for the edge UE from a neighboring cell of the serving cell may be implemented by comparing scheduling utility values of edge UEs in neighboring cells. In this case, refer to FIG. 13. The load balancing apparatus 120 may further include a determining unit 124. The interface unit 121 receives state information that is of the edge UE in the serving cell and is sent by the first entity; the determining unit 124 is configured to determine, according to the state information of the edge UE in the serving cell, a scheduling utility value of the edge UE in the scheduling cell; and then, the utility value determined by the determining unit 124 is sent, through the interface unit 121, to the first entity, so that the first entity selects the scheduling cell according to the utility value.

Same as the foregoing embodiments, a control channel in this embodiment may be a PDCCH, and a data channel may be a PDSCH. It should be noted that, the interface unit 121 in this embodiment may be an interface circuit inside a base station, or may also be an X2 interface. For example, when the serving cell and the scheduling cell are cells under a same base station or cells controlled by a BBU in a centralized manner, the interface unit 121 may be an interface circuit inside the base station or an interface of a high-speed interconnection bus between BBUs. When the serving cell and the scheduling cell are cells under different base stations, the interface unit 121 may be an X2 interface. A sending unit 123 may be a transmitter of the base station, or a transceiver integrated together with a receiver. An allocating unit 122 may be an independently disposed processor, or may also be integrated in a certain processor of a base station, and in addition, may further be stored in a memory of a base station in a form of program code, where a processor of the base station invokes the program code and executes a function of the allocating unit 122. The determining unit 124 may be implemented in a same way as the allocating unit 122, and may be integrated together with the allocating unit 122, or may also be implemented independently. The processor herein may be a central processing unit (Central Processing Unit, CPU), or an application specific integrated circuit (Application Specific Integrated Circuit, ASIC), or one or more integrated circuits configured to implement the embodiment of the present invention.

Refer to FIG. 14, which is a schematic structural diagram of a load balancing apparatus according to still another embodiment of the present invention. The apparatus 140 is located at a first entity in which a serving cell of an edge user equipment UE is located, and includes a processor 141 and an interface circuit 142. FIG. 14 further shows a memory 143 and a bus 144. The processor 141, the interface circuit 142, and the memory 143 are connected to and communicate with each other through the bus 144.

The bus 144 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus 144 may include an address bus, a data bus, a control bus, or the like. For ease of presentation, the bus 144 is only represented by a bold line in FIG. 14, but it does not mean that there is only one bus or one type of bus.

The memory 143 is configured to store executable program code, where the program code includes computer operating instructions. The memory 143 may include a high-speed RAM memory, and may further include a non-volatile memory (non-volatile memory), for example, at least one magnetic disk memory.

The processor 141 may be a central processing unit (Central Processing Unit, CPU), or an application specific integrated circuit (Application Specific Integrated Circuit, ASIC), or one or more integrated circuits configured to implement the embodiment of the present invention.

The processor 141 is configured to implement a function of the first entity in which the serving cell is located. For example, the processor 141 is configured to execute the following operations:

selecting a scheduling cell for the edge UE from a neighboring cell of the serving cell;

instructing, through the interface circuit 142, a second entity to allocate, in the scheduling cell, a data channel resource for the edge UE;

receiving, through the interface circuit 142, an allocation result that is of the data channel resource and is sent by the second entity, and allocating, in the serving cell, a control channel resource for the edge UE according to the allocation result of the data channel resource; and

sending data of the edge UE to the second entity through the interface circuit 142, so as to send the data of the edge UE to the edge UE by using the data channel resource allocated by the second entity.

Further, the processor 141 may further obtain scheduling utility values of the edge UE in all neighboring cells through the interface circuit 142; and select, according to the scheduling utility values of the edge UE in all the neighboring cells, a cell with an optimal utility value from all the neighboring cells as the scheduling cell.

Further, the processor 141 may send state information of the edge UE in the serving cell to an entity in which the neighboring cell is located through the interface circuit 142, so that the entity in which the neighboring cell is located calculates a scheduling utility value of the edge UE in the neighboring cell according to the state information of the edge UE in the serving cell; and receive, through the interface circuit 142, a utility value obtained, by calculation, by an entity in which each neighboring cell is located, so as to select the scheduling cell according to the received utility value.

Further, the processor 141 may perform a load balancing operation from a most heavily loaded cell. Specifically, the processor 141 may sort all cells that meet a condition according to a load indicator; and determine that an edge UE in the most heavily loaded cell is the edge UE to be scheduled. Then, the foregoing operation is repeated until load balancing is achieved. The met condition is that a capacity and a time delay of a communication link between cells enable sharing and synchronization of UE data between the cells. The load indicator is the same as that described in the foregoing embodiments, and details are not repeatedly described herein.

Further, the processor 141 may detect a control channel load of the serving cell of the edge UE; and perform load balancing processing when control channel resources are sufficient. Specifically, when it is detected the control channel load is lower than a threshold, a scheduling cell is selected for the edge UE. The threshold is the same as that described in the foregoing embodiments, and details are not repeatedly described herein.

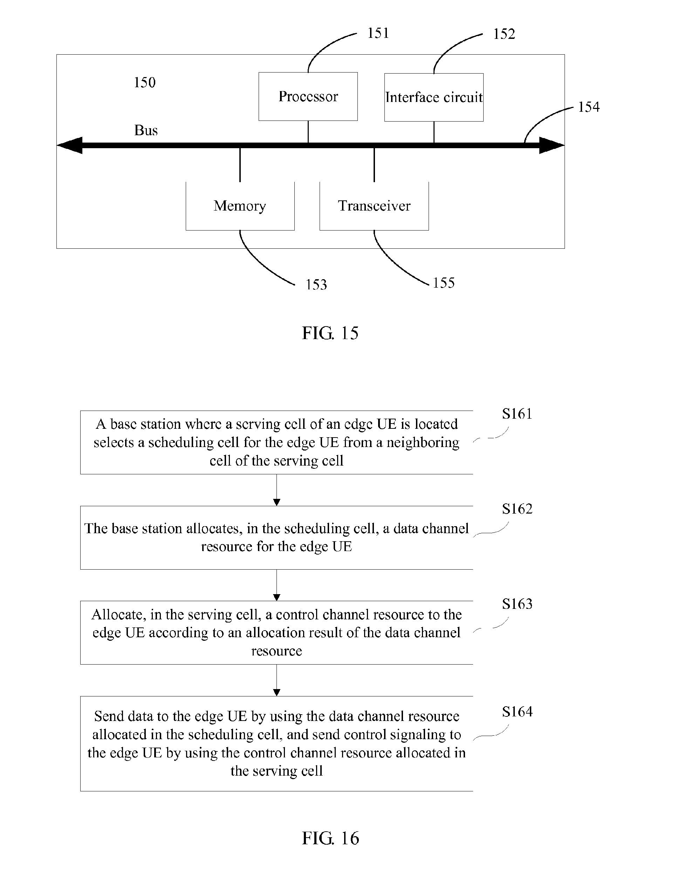

Refer to FIG. 15, which is a schematic structural diagram of a load balancing apparatus according to still another embodiment of the present invention. The apparatus 150 is located at a second entity in which a scheduling cell of an edge user equipment UE is located, and includes a processor 151 and an interface circuit 152. FIG. 15 further shows a memory 153, a bus 154, and a transceiver 155. The processor 151, the interface circuit 152, the memory 153, and the transceiver 155 are connected to and communicate with each other through the bus 154.

The bus 154 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus 154 may include an address bus, a data bus, a control bus, or the like. For ease of presentation, the bus 154 is only represented by a bold line in FIG. 15, but it does not mean that there is only one bus or one type of bus.

The memory 153 is configured to store executable program code, where the program code includes computer operating instructions. The memory 153 may include a high-speed RAM memory, and may further include a non-volatile memory (non-volatile memory), for example, at least one magnetic disk memory.

The processor 151 may be a central processing unit (Central Processing Unit, CPU), or an application specific integrated circuit (Application Specific Integrated Circuit, ASIC), or one or more integrated circuits configured to implement the embodiment of the present invention.

The processor 151 is configured to implement a function of the second entity in which the scheduling cell is located. For example, the processor 151 is configured to execute the following operations:

receiving, through the interface circuit 152, a notification message sent by a first entity, where the notification message is sent to the second entity by the first entity after the first entity selects a scheduling cell for the edge UE from a neighboring cell of a serving cell, and is used to instruct the second entity to allocate a data channel resource for the edge UE;

allocating, in the scheduling cell, a data channel resource for the edge UE according to the notification message;

sending an allocation result of the data channel resource to the first entity through the interface circuit 152, so that the first entity allocates, in the serving cell, a control channel resource for the edge UE according to the allocation result of the data channel resource, and sends data of the edge UE to the second entity; and

receiving the data of the edge UE through the interface circuit 152, and sending, through the transceiver 155 and by using the allocated data channel resource, the data to the edge UE.

Further, the processor 151 may further receive, through the interface circuit 152, state information that is of the edge UE in the serving cell and is sent by the first entity; determine, according to the state information of the edge UE in the serving cell, a scheduling utility value of the edge UE in the scheduling cell; and send the utility value to the first entity through the interface circuit 152, so that the first entity selects a scheduling cell according to the utility value. It should be noted that, the foregoing entity in which the serving cell or the neighboring cell is located may be a processing core, a processor, a baseband board, or a base station. For example, when the serving cell and a certain neighboring cell (for example, the selected scheduling cell) are under a same base station, entities where the serving cell and the neighboring cell are located may be the same base station, or different baseband boards under the same base station, or different processors under a same baseband board, or different processing cores of a same processor. For another example, when the serving cell and a certain neighboring cell are cells controlled by a BBU in a centralized manner, entities where the serving cell and the neighboring cell are located may be different BBUs, or different processors or processing cores under a same BBU. For still another example, when the serving cell and a certain neighboring cell are cells under different base stations that are interconnected in a high-speed way by using an X2 interface, entities where the serving cell and the neighboring cell are located may be the different base stations.

In addition, in the foregoing, a control channel may be a physical downlink control channel (PDCCH), and a data channel may be a physical downlink shared channel (PDSCH). Refer to FIG. 16, which is a flowchart of a load balancing method according to another embodiment of the present invention. As shown in FIG. 16, the load balancing method is applied to cells under a same base station, or all cells controlled by a BBU in a centralized manner. As shown in FIG. 16, the method includes the following steps:

S161: A base station where a serving cell of an edge UE is located selects a scheduling cell for the edge UE from a neighboring cell of the serving cell. In this case, the scheduling cell and the serving cell are under a same base station.
S162: The base station allocates, in the scheduling cell, a data channel resource for the edge UE.
S163: Allocate, in the serving cell, a control channel resource for the edge UE according to an allocation result of the data channel resource.
S164: Send data to the edge UE by using the data channel resource allocated in the scheduling cell, and send control signaling to the edge UE by using the control channel resource allocated in the serving cell.

Further, the base station may obtain scheduling utility values of the edge UE in all neighboring cells; and select a neighboring cell with an optimal utility value from all the neighboring cells as the scheduling cell. Regarding the obtaining of the utility values, the utility values may be obtained, by calculation, according to state information of the UE in the serving cell.

In addition, the base station may also sort all cells that meet a condition according to a load indicator, and then start performing load balancing from a most heavily loaded cell, that is, execute the operations shown in FIG. 16. The met condition is that a capacity and a time delay of a communication link between cells enable sharing and synchronization of UE data between the cells.

In addition, before performing load balancing, that is, before executing the operations shown in FIG. 16, the base station may further detect a control channel load of the serving cell of the edge UE, and when control channel resources are sufficient, the base station executes the operations shown in FIG. 16. Specifically, when the control channel load is lower than a threshold, the base station selects the scheduling cell for the edge UE.

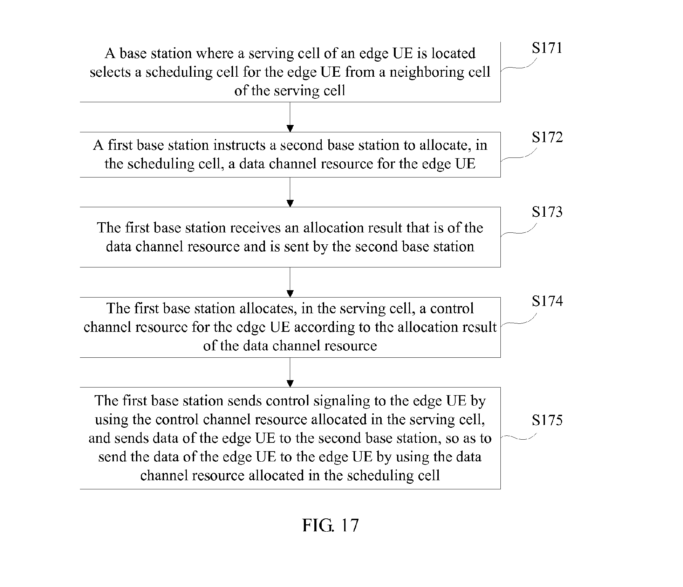

Refer to FIG. 17, which is a flowchart of a load balancing method according to another embodiment of the present invention. As shown in FIG. 17, the load balancing method is applied to cells under different base stations. As shown in FIG. 17, the method includes the following steps:

S 171: A base station where a serving cell of an edge UE is located selects a scheduling cell for the edge UE from a neighboring cell of the serving cell.
In this case, the scheduling cell and the serving cell are under different base stations, and when a base station where the serving cell is located is a first base station, and a base station where the scheduling cell is located is a second base station, the method further includes:
S172: A first base station instructs a second base station to allocate, in the scheduling cell, a data channel resource for the edge UE.
S173: The first base station receives an allocation result that is of the data channel resource and is sent by the second base station.
S174: The first base station allocates, in the serving cell, a control channel resource for the edge UE according to the allocation result of the data channel resource.
S175: The first base station sends control signaling to the edge UE by using the control channel resource allocated in the serving cell, and sends data of the edge UE to the second base station, so as to send the data of the edge UE to the edge UE by using the data channel resource allocated in the scheduling cell.

Further, the first base station may obtain scheduling utility values of the edge UE in all neighboring cells; and select a neighboring cell with an optimal utility value from all the neighboring cells as the scheduling cell. Regarding the obtaining of the utility values, the utility values may be obtained, by calculation, according to state information of the UE in the serving cell. For example, the first base station may send the state information of the edge UE in the serving cell to the second base station, so that the second base station calculates, according to the state information of the edge UE in the serving cell, a utility value of scheduling the edge UE in a cell, so as to send the utility value to the first base station, for the first base station to select the scheduling cell.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person skilled in the art can clearly understand that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts shown as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A load balancing method, comprising:

    selecting, by a first entity in which a serving cell of an edge user equipment UE is located, a scheduling cell for the edge UE from a neighboring cell of the serving cell, wherein an entity in which the scheduling cell is located is a second entity;
    instructing, by the first entity, the second entity to allocate, in the scheduling cell, a data channel resource for the edge UE;
    receiving, by the first entity, an allocation result that is of the data channel resource and is sent by the second entity; and allocating, in the serving cell, a control channel resource for the edge UE according to the allocation result of the data channel resource; and
    sending, by the first entity, data of the edge UE to the second entity, so as to send the data of the edge UE to the edge UE by using the allocated data channel resource.

2. The method according to claim 1, wherein the selecting, by a first entity, a scheduling cell for the edge UE comprises:

obtaining scheduling utility values of the edge UE in all neighboring cells; and
selecting, according to the scheduling utility values of the edge UE in all the neighboring cells, a cell with an optimal utility value from all the neighboring cells as the scheduling cell.

3. The method according to claim 2, wherein the obtaining scheduling utility values of the edge UE in all neighboring cells comprises: obtaining a scheduling utility value of the edge UE in a first neighboring cell, wherein the first neighboring cell is any one neighboring cell of all the neighboring cells, and the obtaining a scheduling utility value of the edge UE in a first neighboring cell comprises:

sending, by the first entity, state information of the edge UE in the serving cell to an entity in which the first neighboring cell is located; and
receiving the scheduling utility value that is of the edge UE in the first neighboring cell and is determined, according to the state information of the edge UE, by the entity in which the first neighboring cell is located.

4. The method according to any one of claims 1 to 3, before the selecting, by a first entity, a scheduling cell for the edge UE, further comprising:

determining the edge UE to be scheduled, which comprises:

sorting all cells that meet a condition according to a load indicator; and
determining that an edge UE in a most heavily loaded cell is the edge UE to be scheduled.

5. The method according to claim 4, wherein the met condition is that a capacity and a time delay of a communication link between cells enable sharing and synchronization of UE data between the cells.

6. The method according to claim 4 or 5, wherein the load indicator comprises a highest scheduling priority of a cell, or a quantity of to-be-scheduled UEs with data.

7. The method according to any one of claims 1 to 6, before the selecting, by a first entity, a scheduling cell for the edge UE, further comprising:

detecting a control channel load of the serving cell of the edge UE; and
when the control channel load is lower than a threshold, selecting the scheduling cell for the edge UE.

8. The method according to any one of claims 1 to 7, wherein the control channel is a physical downlink control channel PDCCH, and the data channel is a physical downlink shared channel PDSCH.

9. A load balancing method, comprising:

receiving, by a second entity in which a scheduling cell of an edge user equipment UE is located, a notification message sent by a first entity, wherein the first entity is an entity in which a serving cell of the edge UE is located, and the notification message is sent by the first entity to the second entity after the first entity selects the scheduling cell for the edge UE from a neighboring cell of the serving cell, and is used to instruct the second entity to allocate a data channel resource for the edge UE;
allocating, by the second entity and in the scheduling cell, a data channel resource for the edge UE according to the notification message;
sending, by the second entity, an allocation result of the data channel resource to the first entity, so that the first entity allocates, in the serving cell, a control channel resource for the edge UE according to the allocation result of the data channel resource, and sends data of the edge UE to the second entity; and
receiving, by the second entity, the data of the edge UE, and sending the data of the edge UE to the edge UE by using the allocated data channel resource.

10. The method according to claim 9, before the receiving, by a second entity, a notification message sent by a first entity, further comprising:

receiving state information that is of the edge UE in the serving cell and is sent by the first entity;

determining a scheduling utility value of the edge UE in the scheduling cell according to the state information of the edge UE in the serving cell; and

sending the utility value to the first entity, so that the first entity selects the scheduling cell according to the utility value.

11. The method according to claim 9 or 10, wherein the control channel is a physical downlink control channel PDCCH, and the data channel is a physical downlink shared channel PDSCH.

12. A load balancing apparatus, wherein the apparatus is located at a first entity in which a serving cell of an edge user equipment UE is located, and the apparatus comprises:

a selecting unit, configured to select a scheduling cell for the edge UE from a neighboring cell of the serving cell, wherein an entity in which the scheduling cell is located is a second entity;

an interface unit, configured to instruct the second entity to allocate, in the scheduling cell, a data channel resource for the edge UE, and configured to receive an allocation result that is of the data channel resource and is sent by the second entity; and

an allocating unit, configured to allocate, in the serving cell, a control channel resource for the edge UE according to the allocation result of the data channel resource; and

the interface unit is further configured to send data of the edge UE to the second entity, so as to send the data of the edge UE to the edge UE by using the allocated data channel resource.

13. The apparatus according to claim 12, wherein the interface unit is further configured to obtain scheduling utility values of the edge UE in all neighboring cells; and

the selecting unit is specifically configured to select, according to the scheduling utility values of the edge UE in all the neighboring cells, a cell with an optimal utility value from all the neighboring cells as the scheduling cell.

14. The apparatus according to claim 13, wherein the scheduling utility values of the edge UE in all the neighboring cells are determined, according to state information of the edge UE in the serving cell, by an entity in which each neighboring cell is located.

15. The apparatus according to any one of claims 12 to 14, further comprising:

a sorting unit, configured to sort all cells that meet a condition according to a load indicator; and

a determining unit, configured to determine that an edge UE in a most heavily loaded cell is the edge UE to be scheduled.

16. The apparatus according to claim 15, wherein the met condition is that a capacity and a time delay of a communication link between cells enable sharing and synchronization of UE data between the cells.

17. The apparatus according to claim 15 or 16, wherein the load indicator comprises a highest scheduling priority of a cell, or a quantity of to-be-scheduled UEs with data.

18. The apparatus according to any one of claims 12 to 17, further comprising:

a detecting unit, configured to detect a control channel load of the serving cell of the edge UE, wherein:

the selecting unit is configured to, when the control channel load is lower than a threshold, select the scheduling cell for the edge UE.

19. The apparatus according to any one of claims 12 to 18, wherein the control channel is a physical downlink control channel PDCCH, and the data channel is a physical downlink shared channel PDSCH.

20. A load balancing apparatus, wherein the apparatus is located at a second entity in which a scheduling cell of an edge user equipment UE is located, and the apparatus comprises:

an interface unit, configured to receive a notification message sent by a first entity, wherein the first entity is an entity in which a serving cell of the edge UE is located, and the notification message is sent by the first entity to the second entity after the first entity selects the scheduling cell for the edge UE from a neighboring cell of the serving cell, and is used to instruct the second entity to allocate a data channel resource for the edge UE; an allocating unit, configured to allocate, in the scheduling cell, a data channel resource for the edge UE according to the notification message, wherein:

the interface unit is further configured to send an allocation result of the data channel resource to the first entity, so that the first entity allocates, in the serving cell, a control channel resource for the edge UE according to the allocation result of the data channel resource, and sends data of the edge UE to the second entity; and further configured to receive the data of the edge UE; and
a sending unit, configured to send the data to the edge UE by using the allocated data channel resource.

21. The apparatus according to claim 20, wherein the interface unit is further configured to receive state information that is of the edge UE in the serving cell and is sent by the first entity; the apparatus further comprises:

a determining unit, configured to determine a scheduling utility value of the edge UE in the scheduling cell according to the state information that is of the edge UE in the serving cell and is received by the interface unit; and
the interface unit is further configured to send the utility value determined by the determining unit to the first entity, so that the first entity selects the scheduling cell according to the utility value.

22. The apparatus according to claim 20 or 21, wherein the control channel is a physical downlink control channel PDCCH, and the data channel is a physical downlink shared channel PDSCH.

23. A load balancing system, comprising a first load balancing apparatus according to any one of claims 12 to 19 and a second load balancing apparatus according to any one of claims 20 to 22.

Determine a first cell that requires load balancing and a second cell that participates in the load balancing, where the first cell is adjacent to the second cell ⟶ 101

Adjust a load balancing related parameter, where the load balancing related parameter includes one or a combination of the following information: a cell handover related parameter and a cell reselection related parameter ⟶ 102

Configure the first cell or the second cell according to a load balancing related parameter that is obtained after the adjustment ⟶ 103

FIG. 1

Determine load indicators of second type cells among all cells controlled by a network control node ⟶ 201

Sequentially determine target scheduling cells of edge users of the second type cells in descending order of the load indicators ⟶ 202

Schedule the edge users in the target scheduling cells ⟶ 203

FIG. 2

```
┌────────────────────────────────────────────────┐
│        An edge user exists between cells         │──〜301
└────────────────────────────────────────────────┘
                        │
                        ▼
┌────────────────────────────────────────────────┐
│ Downlink control channel PDCCH load of a serving cell │──〜302
│      of the edge user is lower than a threshold       │
└────────────────────────────────────────────────┘
                        │
                        ▼
┌────────────────────────────────────────────────┐
│ Sort, at each scheduling moment, cells that require fast │──〜303
│                    coordination                      │
└────────────────────────────────────────────────┘
                        │
                        ▼
┌────────────────────────────────────────────────┐
│ The serving cell and a neighboring cell determine a target │──〜304
│           scheduling cell of the edge user             │
└────────────────────────────────────────────────┘
                        │
                        ▼
┌────────────────────────────────────────────────┐
│  Schedule the edge user in the target scheduling cell  │──〜305
└────────────────────────────────────────────────┘
```

FIG. 3

```
┌────────────────────────────────────────────────┐
│ A network control node periodically collects load related │──〜401
│                 information of a cell                 │
└────────────────────────────────────────────────┘
                        │
                        ▼
┌────────────────────────────────────────────────┐
│   Calculate a total utility function of a current network   │──〜402
└────────────────────────────────────────────────┘
                        │
                        ▼
┌────────────────────────────────────────────────┐
│             Select a slow coordinating cell             │──〜403
└────────────────────────────────────────────────┘
                        │
                        ▼
┌────────────────────────────────────────────────┐
│    Determine a load balancing configuration of each cell    │──〜404
└────────────────────────────────────────────────┘
                        │
                        ▼
┌────────────────────────────────────────────────┐
│        Deliver the load balancing configuration         │──〜405
└────────────────────────────────────────────────┘
```

FIG. 4

FIG. 5

FIG. 6

| Serving cell | | Neighboring cell |
| --- | --- | --- |

S701: State information of a UE →

S702: Calculate a utility value of scheduling an edge UE in the neighboring cell

← S703: Utility value

S704: Determine a scheduling cell of the edge UE

S705: Notify the scheduling cell →

S706: Allocate a data channel resource

← S707: Allocation result of the data channel resource

S708: Allocate a control channel resource

S709: Data →

S710: Send the data to the edge UE

FIG. 7

No

S801

S802

Whether an edge UE exists
between cells

Yes

Control channel load is lower
than a threshold

No

Yes

S804

S803

Sequentially trigger a fast coordinating
process of a serving cell and a
neighboring cell according to a sequence

Sort, according to a load indicator, all
cells that require fast coordination

FIG. 8

920

900    910

Interface unit

Selecting unit

930

Allocating unit

FIG. 9

920

900    910

| Interface unit | | Selecting unit |

Allocating unit    930

Sorting unit    940

Determining unit    950

FIG. 10

920

900    960

Detecting unit

910

Interface unit    Selecting unit

930

Allocating unit

FIG. 11

121

120    123

Interface unit    Sending unit

122

Allocating unit

FIG. 12

121

120    123

| Interface unit | Sending unit |

123

122

Allocating unit

124

Determining unit

FIG. 13

141    142

140

Processor    Interface circuit

144

Bus

Memory

143

FIG. 14

151    152

150

Processor    Interface circuit

154

Bus

Memory    Transceiver

153    155

FIG. 15

A base station where a serving cell of an edge UE is located selects a scheduling cell for the edge UE from a neighboring cell of the serving cell

S161

The base station allocates, in the scheduling cell, a data channel resource for the edge UE

S162

Allocate, in the serving cell, a control channel resource to the edge UE according to an allocation result of the data channel resource

S163

Send data to the edge UE by using the data channel resource allocated in the scheduling cell, and send control signaling to the edge UE by using the control channel resource allocated in the serving cell

S164

FIG. 16

A base station where a serving cell of an edge UE is located selects a scheduling cell for the edge UE from a neighboring cell of the serving cell

S171

A first base station instructs a second base station to allocate, in the scheduling cell, a data channel resource for the edge UE

S172

The first base station receives an allocation result that is of the data channel resource and is sent by the second base station

S173

The first base station allocates, in the serving cell, a control channel resource for the edge UE according to the allocation result of the data channel resource

S174

The first base station sends control signaling to the edge UE by using the control channel resource allocated in the serving cell, and sends data of the edge UE to the second base station, so as to send the data of the edge UE to the edge UE by using the data channel resource allocated in the scheduling cell

S175

FIG. 17

# INTERNATIONAL SEARCH REPORT

| International application No. |
| --- |
| **PCT/CN2013/089367** |

### A. CLASSIFICATION OF SUBJECT MATTER

H04W 28/08 (2009.01) i

According to International Patent Classification (IPC) or to both national classification and IPC

### B. FIELDS SEARCHED

Minimum documentation searched (classification system followed by classification symbols)

IPC: H04W, H04Q, H04L, H04B

Documentation searched other than minimum documentation to the extent that such documents are included in the fields searched

Electronic data base consulted during the international search (name of data base and, where practicable, search terms used)

CPRSABS, CNTXT, CNKI, DWPI, 3GPP FTP, IEEE: cell, load, balance, edge, resource

### C. DOCUMENTS CONSIDERED TO BE RELEVANT

| Category* | Citation of document, with indication, where appropriate, of the relevant passages | Relevant to claim No. |
| --- | --- | --- |
| X | CN 101895940 A (BEIJING UNIVERSITY OF POSTS AND TELECOMMUNICATIONS), 24 November 2010 (24.11.2010), description, paragraphs [0031], [0038], [0059] and [0060], and claim 2 | 1-23 |
| A | CN 102752824 A (CHINA UNITED NETWORK COMMUNICATIONS CORPORATION LIMITED), 24 October 2012 (24.10.2012), the whole document | 1-23 |
| A | CN 102325375 A (ZTE CORP.), 18 January 2012 (18.01.2012), the whole document | 1-23 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 March 2014 (05.03.2014) | **20 March 2014 (20.03.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xiaoli** Telephone No.: (86-10) **62411389** |
| --- | --- |

Form PCT/ISA/210 (second sheet) (July 2009)

## INTERNATIONAL SEARCH REPORT
### Information on patent family members

International application No.

**PCT/CN2013/089367**

| Patent Documents referred in the Report | Publication Date | Patent Family | Publication Date |
|---|---|---|---|
| CN 101895940 A | 24.11.2010 | CN 101895940 B | 09.01.2013 |
| CN 102752824 A | 24.10.2012 | None | |
| CN 102325375 A | 18. 01.2012 | WO 2013000242 A1 | 03.01.2013 |

Form PCT/ISA/210 (patent family annex) (July 2009)